# FASCICULE DE BREVET EUROPEEN

(11) **EP 4 481 325 B1**
(45) Date de publication et mention de la délivrance du brevet: **25.11.2026**
(21) Numéro de dépôt: 24172084.6
(22) Date de dépôt: 24.04.2024
(51) Int. Cl.: G01C 19/58, G01C 19/60, G01P 15/08, G01P 15/093, G01V 7/00

(54) **CAPTEUR À ATOMES FROID À BRUIT AMÉLIORÉ**
KALTATOMSENSOR MIT VERBESSERTEM RAUSCHEN
COLD ATOM SENSOR WITH IMPROVED NOISE

(30) Priorité: 22.06.2023 FR 2306475
(43) Date de publication de la demande: 25.12.2024
(73) Titulaire: THALES, 92190 Meudon (FR)
(72) Inventeur: DUPONT-NIVET, Matthieu, 91767 Palaiseau (FR); WIRTSCHAFTER, Benjamin, 91767 Palaiseau (FR); HELLO, Soizic, 86100 Châtellerault (FR)
(74) Mandataire: Atout PI Laplace

(56) Documents cités:
- EP-A1- 4 102 182
- FR-A1- 2 968 088

## Description

### DOMAINE DE L'INVENTION

La présente invention se situe dans le domaine des capteurs inertiels et plus spécifiquement des capteurs inertiels à atomes froids intégré sur une puce atomique. Plus particulièrement l'invention concerne des capteurs à atomes froids sur puce atomique utilisant des champs microondes pour la séparation spatiale des deux états utilisés lors de la mesure des paramètres inertielles (typiquement accélération et vitesse de rotation).

### ETAT DE LA TECHNIQUE

Un interféromètre à atomes froids fait interférer deux états électroniques, dénommé premier état interne la> et deuxième état interne |b> d'un atome, tel que du rubidium 87, dans une séquence de type Ramsey. Une séquence d'interféromètre de type Ramsey mesure une phase φ accumulée lors de la mise en œuvre de la séquence, à partir d'une mesure d'au moins une population d'un état choisi la> ou |b> (préférentiellement une mesure des deux populations pour plus de précision). Les populations pₐ et p_{b} respectivement des deux états la> et |b> en sortie de l'interféromètre sont données par :
${p}_{a} = \frac{1}{2} \left[1-cos\left(φ\right)\right]$ (1)
${p}_{b} = \frac{1}{2} \left[1+cos\left(φ\right)\right]$ (2)

La phase φ est reliée à la différence d'énergie entre E'_{b} et E'ₐ, égales respectivement aux énergies des états a> et |b> modifiées par la mise en œuvre de la séquence interférométrique.
et
$φ = \frac{E {′}_{b} - E {′}_{a}}{ℏ} {T}_{R} - {ωT}_{R}$ (3)
avec *ω* la pulsation de l'oscillateur local réalisant les deux impulsions *π*/2 au début et à la fin de la séquence interférométrique et *T_{R}* le temps de Ramsey, c'est-à-dire le temps écoulé entre les deux impulsions *π*/2.

Soit :
${p}_{a} = \frac{1}{2} \left[1-cos\left(\frac{E {′}_{b} - E {′}_{a}}{ℏ}{T}_{R}-{ωT}_{R}\right)\right]$ (4)
${p}_{b} = \frac{1}{2} \left[1+cos\left(\frac{E {′}_{b} - E {′}_{a}}{ℏ}{T}_{R}-{ωT}_{R}\right)\right]$ (5)

On suppose qu'avant le début de la séquence de Ramsey tous les atomes sont dans l'état |a> ainsi que *E_{b}* > *Eₐ* avec Eₐ et E_{b} les énergies atomiques des états fonction de l'atome et de la transition considérée.

Pour rendre cet interféromètre sensible aux accélérations et rotations, il faut :

Dans le cas des accélérations, séparer les deux états puis les recombiner, c'est-à-dire les déplacer le long d'une ligne droite, depuis leurs positions initiales qui sont identiques, dans deux directions opposées puis leurs faire parcourir la même trajectoire dans le sens inverse jusqu'à les ramener à la même position. Cela permet d'ajouter dans la différence d'énergie entre les deux états un terme lié à l'énergie potentiel d'accélération.

Dans le cas des rotations, les deux états doivent tous deux parcourir une trajectoire fermée incluant une aire non nulle et cela dans des sens opposés pour |a> et |b>. Ainsi on ajoute dans la différence d'énergie entre les deux états un terme dépendant de l'effet Sagnac et donc de la vitesse de rotation.

Pour réaliser ces trajectoires une méthode connue est d'utiliser des séparatrices microondes (guides d'ondes dans lesquels des signaux microonde sont appliqués). Les champs microondes créés réalisent alors un « habillage » des états ce qui a pour effet de créer une force permettant de les déplacer. Cet habillage modifie les énergies des états la> et |b>, de Eₐ vers E'ₐ et de E_{b} vers E'_{b}.

La structure et le principe de fonctionnement d'un capteur de type gyromètre est décrit dans les documents US 15/778605, US 17/924340, US 17/832615 et US 17/832616 et est rappelé ci-dessous. Par exemple les documents WO2017089489, EP4102182 et FR2968088 décrivent un capteur inertiel de type gyroscope à atomes ultrafroids sur puce, utilisant des ondes de matière piégées décrivant des trajectoires fermées incluant une aire.

Les mesures de rotation sur ce type de dispositif sont effectuées en exploitant l'effet Sagnac. Le déphasage *θ* induit par effet Sagnac entre deux ondes de matière contrarotatives dans un référentiel tournant à la vitesse angulaire Ω, est donné par :
$θ = \frac{2 Am}{ℏ} Ω$ (6) où A est l'aire inscrite dans les trajectoires atomiques, m la masse des atomes et h la constante de Planck réduite.

On définit par atomes ultrafroids des atomes dont la température est inférieure à 400 nanokelvins, préférentiellement à 300 nanokelvins. La température d'atomes ultrafroids thermiques est, par exemple pour des atomes de Rubidium, comprise entre 50 et 400 nanokelvins et préférentiellement entre 100 et 300 nanokelvins.

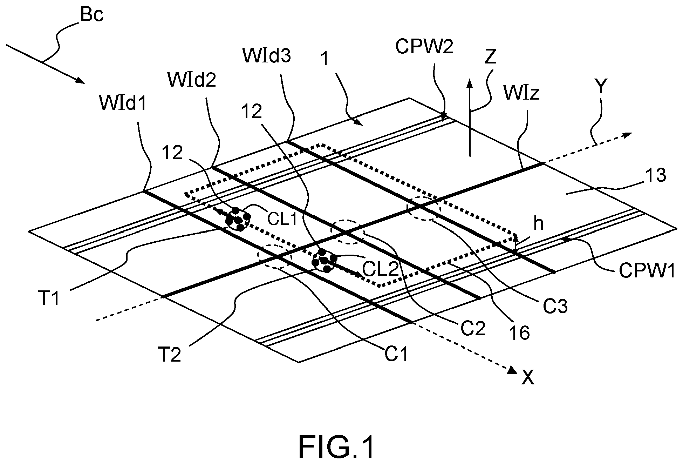

Le principe est de réaliser une trajectoire parcourue de manière contrapropagative par deux nuages d'atomes piégés magnétiquement. La réalisation et le déplacement du piège magnétique selon la trajectoire sont réalisés par des fils conducteurs et des guides microondes selon par exemple la topologie illustrée figure 1 .

La figure 1 illustre schématiquement une puce 1 à atomes ultrafroids 12 ainsi que la trajectoire 16 de deux nuages atomiques CL1 et CL2. Une partie de la surface de la puce 1 forme un plan de mesure 13. Un axe normal au plan de mesure 13 définit l'axe de mesure Z, selon lequel une mesure de rotation Ω*z* est réalisée par le gyromètre.

La puce 1 comprend des moyens adaptés à générer un premier piège à atomes ultrafroids T1 et un deuxième piège à atomes ultrafroids T2, un piège permettant d'immobiliser un nuage d'atomes ultrafroids 12 dans un état interne différent de l'autre piège, à une distance prédéterminée h dudit plan de mesure 13. Par exemple le piège T1 comprend les atomes dans le niveau électronique ou état |a> (nuage CL1) et le piège T2 comprend des atomes dans l'état |b> (nuage CL2). Les niveaux |a> et |b> sont espacés d'une fréquence ω₀/2π. Par exemple dans le cas du rubidium 87 il s'agit des deux niveaux hyperfins |F=1,m-_{F}=-1> et |F=2,m-_{F}=1>, espacés d'environ 6,8 GHz.

Ces moyens permettent également de déplacer les nuages selon la trajectoire 16 localisée dans un plan parallèle au plan de mesure 13, à une hauteur h de ce plan, tel qu'illustré figure 1. Ces moyens sont constitués de guides d'onde et de fils conducteurs tels que décrits ci-dessous.

Les moyens comprennent un premier guide d'onde CPW1 et un deuxième guide d'onde CPW2 adaptés à la propagation de micro-ondes à des pulsations ω_{b} et ωₐ. Les guides d'onde sont disposés symétriquement par rapport à un axe Y du plan de mesure, préférentiellement parallèles. Les deux guides d'ondes CPW1 et CPW2 sont connectés à au moins un générateur de tension ou de courant à fréquences micro-ondes. Par exemple chacun des guides d'onde est réalisé par le dépôt de trois fils conducteurs parallèles pour réaliser un guide d'onde coplanaire. Dans d'autres réalisations on peut utiliser d'autres types de guides d'onde, en particulier des guides d'onde dont la fabrication est compatible avec les techniques de microfabrication par dépôt ou par gravure. On peut, par exemple, réaliser une ligne à microruban.

Les moyens comprennent également des fils conducteurs intégrés à la puce 1 et adaptés à être traversés par des courants continus. Les fils conducteurs sont répartis en un fil conducteur WIz selon un axe de symétrie Y perpendiculaire à X et compris dans le plan de mesure 13, et en une pluralité de n fils conducteurs Wldi, i indice variant de 1 à n, parallèles entre eux et parallèles à l'axe X, n étant au moins égal à 2. Dans l'exemple de la figure 1 n=3, soit trois fils conducteurs Wld1, WId2 et WId3. Les fils sont agencés de manière à définir n points de croisement Ci (croisement entre WIz et WIdi) localisés sur l'axe Y, ici 3 points de croisement C1, C2, C3.

Chaque fil conducteur est relié à un ou plusieurs générateurs de courant et/ou de tension, eux-mêmes reliés à une unité de traitement comportant au moins un microprocesseur. Les générateurs de tension et/ou de courant permettent de piloter aussi bien des courants continus que des courants alternatifs dans les fils. En particulier, des courants continus sont pilotés dans les fils conducteurs.

Dans le capteur, la puce à atomes 1 est placée dans une enceinte à vide entretenu, par exemple, à l'aide d'une pompe ionique et comportant préférentiellement un blindage magnétique. Le capteur comporte un dispositif de génération d'atomes ultrafroids qui comprend :
- un émetteur d'atomes (*dispenser* en anglais), par exemple réalisé par un filament chauffant délivrant une vapeur de rubidium ;
- un piège primaire à atomes (optique et/ou magnétique), permettant de pré-refroidir et de disposer un nuage d'atomes ultrafroids au voisinage de la puce, pour charger en atomes les pièges magnétiques T1 et T2 décrits ultérieurement.

Le capteur comprend également une source de champ magnétique, extérieure à la puce 1. Elle permet d'imposer un champ magnétique homogène et stationnaire Bc sur une épaisseur au moins de l'ordre d'une hauteur h au-dessus du plan de mesure 13. Avantageusement, la direction du champ magnétique homogène est parallèle au plan de mesure.

Sur la figure 1 la trajectoire 16 en pointillés illustre la trajectoire des nuages d'atomes ultrafroids 12. Cette trajectoire fermée définit une aire notée A. Une distance h sépare le plan de la trajectoire 16 et le plan de mesure 13 de la puce. Préférentiellement h est compris entre 500 nm et 1 mm, et préférentiellement entre 5 µm et 500 µm.

La figure 2 illustre la géométrie des guides et fils de la puce atomique ainsi que les pièges T1 et T2.

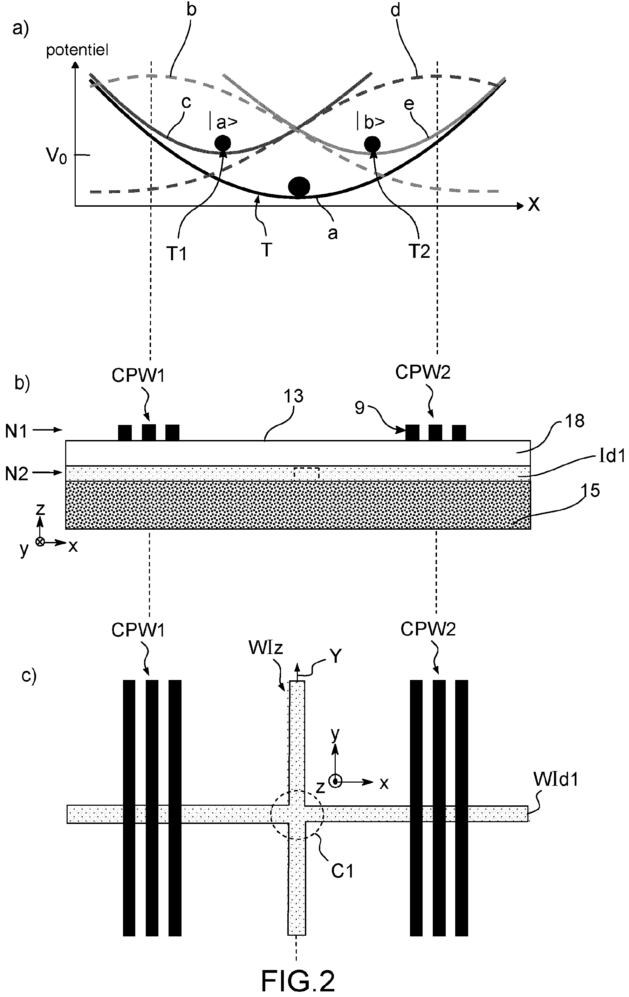

L'agencement spécifique des fils conducteurs et des guides d'ondes, associé à la source de champ magnétique homogène, permet d'obtenir aisément deux pièges T1 et T2 tels qu'illustrés dans la partie a) de la figure 2. Chaque piège T1 et T2 présente une valeur du minimum V0 non nulle et identique, et une courbure identique, condition nécessaire pour que le capteur fonctionne. En effet, comme expliqué plus loin, lorsqu'un courant continu est appliqué sur au moins deux fils conducteurs d'un point de croisement, le minimum de potentiel est localisé à la verticale de ce point de croisement. Lorsqu'ensuite une puissance hyperfréquence est envoyée dans les guides d'onde, le minimum central se transforme en deux minima de part et d'autre du minimum initial dans la direction des guides d'onde. Si le minimum initial n'est pas situé strictement à égal distance des deux guides d'ondes, les deux minima de potentiels créés n'auront pas rigoureusement la même valeur du minimum V0 et la même courbure.

La partie c) de la figure 2 illustre la disposition des fils conducteurs définissant le point de croisement initial C1 et des guides d'ondes (vue de dessus). La partie b) de la figure 2 décrit la disposition correspondante des fils conducteurs et des guides d'onde imprimés sur une puce en vue de profil, en coupe selon le fil conducteur WId1 qui croise le fil conducteur WIz selon l'axe de symétrie Y. Les guides d'onde CPW1 et CPW2 sont des guides d'onde coplanaires situés sur un premier niveau N1. La couche 18 isolante permet avantageusement d'aplanir le plan de mesure. Le matériau de la couche d'isolant électrique peut être par exemple du dioxyde de silicium, du nitrure de silicium ou benzocyclobutène. Un matériau conducteur est utilisé pour la fabrication des fils conducteurs, par exemple de l'or, et est déposé sur un substrat 15, formant un deuxième niveau N2. Le substrat peut être par exemple en silicium, en nitrure d'aluminium ou en carbure de silicium.

On voit sur la partie a) la séparation symétrique d'atomes ultrafroids, spécifique à l'état interne desdits atomes ultrafroids, et plus précisément les variations de potentiels en fonction de l'axe X de la puce 1.

La courbe « a » présente un puits de potentiel correspondant à l'association du champ magnétique homogène et du champ créé par deux fils conducteurs sécants, le fil WIz parcouru par le courant I_{Z} et le fil WId1 parcouru par le courant Id1. Il résulte un puits de potentiel local formant un piège atomique T selon trois dimensions. Un nuage d'atomes ultrafroids peut y être piégé et refroidis.

La courbe « b » présente de manière schématique le potentiel créé par la transmission de micro-ondes à la fréquence ω_{b} dans le guide d'onde CPW1. Le champ émis par le passage de micro-ondes à la fréquence ω_{b} permet de modifier l'énergie des atomes ultrafroids et de déplacer les atomes d'états internes |b>. La courbe « e » illustre le potentiel vu par les états internes |b> dus aux contributions des potentiels illustrés par la courbe « a » et par la courbe « b ». La courbe « e » présente un minimum local de potentiel permettant de piéger localement un nuage d'atomes ultrafroids d'états internes |b>.

De manière similaire, la courbe « d » présente de manière schématique le potentiel créé par la transmission de micro-ondes à la fréquence ωₐ dans le guide d'onde CPW2. Le champ émis par le passage de micro-ondes à la fréquence ωₐ permet de modifier l'énergie des atomes ultrafroids et de déplacer les atomes d'états internes |a>. La courbe « c » illustre le potentiel vu par les atomes d'états internes la> dû aux contributions des potentiels illustrés par la courbe « a » et par la courbe « d ». La courbe « c » présente un minimum local d'énergie permettant de piéger localement un nuage d'atomes ultrafroids d'états internes |a>.

L'association d'un piège magnétique DC (créé par les courants continus dans les fils et le champ homogène Bc) et d'un champ micro-onde créé ce qu'on appelle un piège « habillé ». On entend par « habillé » un piège créé au moins en partie par un champ oscillant micro-onde, radio-fréquence ou optique. Les changements des champs micro-ondes (puissance, fréquence et guide dans lequel ils se propagent) permettent de déplacer ce piège habillé et donc de déplacer les atomes. Le piège magnétique DC est représenté sur la figure 2 par la courbe a. Le champ micro-onde à ωa est représenté sur la figure 2 par la courbe d et le champ micro-onde à ωb est représenté sur la figure 2 par la courbe b. Le piège habillé T1 (association des courbes a et d pour l'état |a> est représenté par la courbe c et le piège habillé T2 (association des courbes a et b) pour l'état |b> est représenté par la courbe e.

Les nuages d'atomes ultrafroids d'états internes |a> et |b> peuvent être séparés et piégés de manière symétrique par rapport à l'axe de symétrie Y en imposant simultanément la propagation d'ondes de fréquence ωₐ dans CPW2 et ω_{b} dans CPW1. Pour obtenir deux pièges dont les minima sont de même valeur V0 et dont les courbures sont de même valeur, il est important que le point de croisement C1 soit disposé à égal distance de CPW1 et CPW2, sur l'axe de symétrie Y.

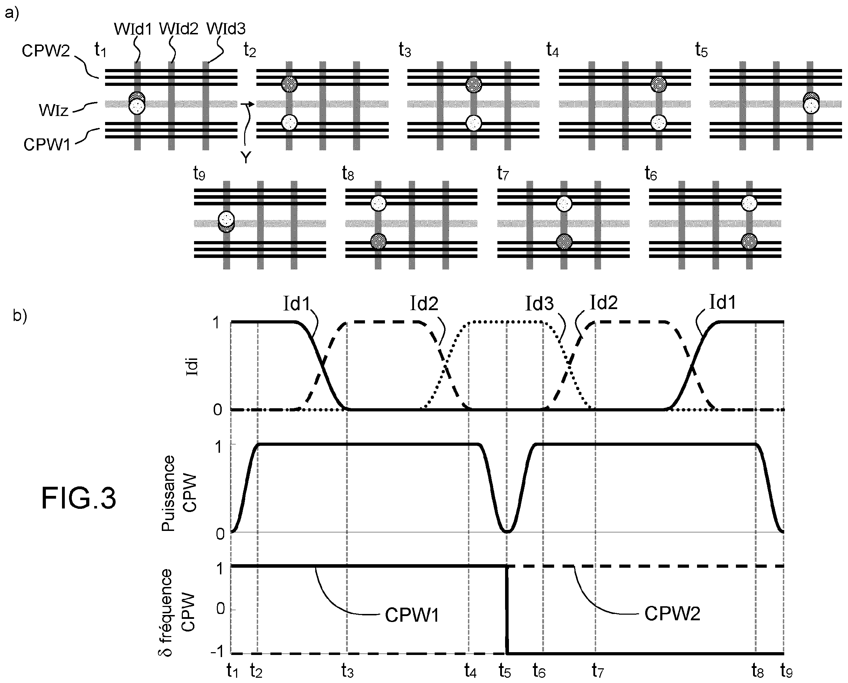

La figure 3 illustre le principe de génération de la trajectoire 16. La partie a) de la figure 3 présente schématiquement une séquence du déplacement de chacun des nuages d'atomes ultrafroids à des temps caractéristiques t₁ à t₉. La partie b) illustre de manière complémentaire une séquence des différents courants appliqués aux fils conducteurs, des puissances appliquées aux guides d'onde et des fréquences imposées aux guides d'onde, pour les temps correspondant à ceux de la partie a).

Dans la séquence présentée dans la figure 3, le courant I_{z}, non présenté, circulant dans WIz est stationnaire, à une valeur constante. Dans la partie b) les valeurs des courants, des puissances et des fréquences sont arbitraires. L'ordonnée δ fréquence correspond à une variation de fréquence exprimée en unité arbitraire, autour d'une valeur moyenne de la fréquence. Les courants parcourant les fils conducteurs peuvent être compris entre 100 µA et 10 A, et les pulsations injectées dans les guides d'onde peuvent être comprises entre 6,6 GHz et 7 GHz dans le cas de l'utilisation d'atomes de rubidium.

Dans une **étape A0,** il y a une phase de préparation des atomes On génère un nuage d'atomes ultrafroids 12, incluant des phases d'émission desdits atomes, de refroidissement desdits atomes, d'initialisation desdits atomes dans au moins un état interne |a> et de piégeage d'un nuage de dits atomes ultrafroids dans un minimum local de potentiel, à une distance h du plan de mesure (piège T, courbe « a » de la figure 2 partie a)). La hauteur h est différente de 0 car le champ magnétique homogène Bc est non nul. Le piégeage s'effectue par passage de courants continus dans le fil WIz et dans un des fils Wldi, le point de croisement de ces deux fils définissant le point de départ (ici C1 avec WId1). On applique en même temps un champ magnétique de biais Bc parallèle au plan de la puce atomique qui se superpose au champ magnétique crée par les deux fils précédents. Le nuage d'atomes est alors piégé à la verticale de C1, intersection des fils WIz et WId1.

Dans une étape B0 on initialise les états internes en superposant de manière cohérente lesdits atomes ultrafroids entre lesdits états la> et |b> par une première impulsion *π*/2 . Cette impulsion peut être réalisée par un laser, une émission micro-ondes, ou plus généralement par une méthode émettant des ondes à une fréquence de transition adaptée. Les courants I_{Z} et I_{d1} sont imposés respectivement aux fils conducteurs WIz et WId1. Les deux états internes la> et |b> sont superposés de manière cohérente et spatialement à l'aplomb du point de croisement C1.

La fonction d'onde est alors :
$\frac{\left|a\right〉 + \left|b\right〉}{\sqrt{2}}$

Dans une **étape C0** on sépare spatialement un nuage d'atomes d'état interne |a> dans un piège T1 d'un nuage d'atomes d'état interne |b> dans un autre piège T2 et on déplace les pièges en sens opposé suivant une trajectoire fermée 16 contenue dans un plan perpendiculaire à l'axe de mesure Z. Le nuage d'atomes d'états internes |a> est symbolisé par un disque de texture claire et le nuage d'atomes d'états internes |b> est symbolisé par un disque de texture plus foncée. Cette étape est réalisée à partir de t1 jusqu'à t9.

Entre t₁ et t₂, la puissance micro-ondes injectée dans les guides d'onde CPW1 et CPW2, passe progressivement de 0 à sa valeur maximale. Une pulsation ω_{b} est envoyée dans le guide d'onde CPW1 et une pulsation ωₐ est envoyée dans le guide d'onde CPW2, ce qui permet de séparer les deux nuages d'états internes différents de part et d'autre de l'axe de symétrie Y, d'une distance d, jusqu'aux positions schématisées dans t₂. Le piège T à atomes ultrafroids décrit précédemment à l'instant t₁ est alors transformé en deux pièges T1 et T2 à atomes ultrafroids, chaque piège permettant d'immobiliser un nuage d'atomes ultrafroids d'états internes différents de l'autre piège (en l'occurrence d'états internes |a> dans l'un des pièges, par exemple T1, et d'états internes |b> dans l'autre piège T2, comme décrit dans la partie a) de la figure 2.

Un point de croisement Ci correspond au croisement du fil WIz avec le fil Wldi.

Entre t₂ et t₃, le courant I_{d1} est progressivement coupé et I_{d2} est progressivement porté à sa valeur maximale (l'intervalle de temps séparant t₂ et t₃ est typiquement de l'ordre de 10 ms et peut être compris entre 0,1 ms et 100 ms : les deux pièges T1 et T2 sont déplacés vers la droite jusqu'aux positions schématisées dans t₃.

Entre t₃ et t₄ le courant I_{d2} est progressivement coupé et I_{d3} est progressivement porté à sa valeur maximale : les deux pièges sont déplacés vers la droite jusqu'aux positions schématisées dans t₄.

Entre t₄ et t₅, la puissance micro-onde est progressivement coupée : les deux pièges sont ramenés au même endroit de la puce, schématisé dans t₅.

A t₅, les pulsations des deux guides micro-ondes sont modifiées : la pulsation ωₐ est imposée dans CPW1 et la pulsation ω_{b} est imposée dans CPW2.

Entre t₅ et t₆, la puissance dans les deux guides d'onde passe progressivement de 0 à sa valeur maximale : les pièges sont séparés dans la direction verticale comme schématisé dans la figure t₆.

Entre t₆ et t₇, le courant I_{d3} est progressivement coupé et I_{d2} est progressivement porté à sa valeur maximale : les deux pièges T1 et T2 sont déplacés vers la gauche jusqu'aux positions schématisées dans t₇.

Entre t₇ et t₈, le courant I_{d2} est progressivement coupé et I_{d1} est progressivement porté à sa valeur maximale: les deux pièges sont déplacés vers la gauche jusqu'aux positions schématisées dans t₈. Cette opération peut être répétée plusieurs fois avec d'autres premiers fils conducteurs pour augmenter l'aire incluse dans la trajectoire 16.

Entre t₈ et t₉, la puissance micro-onde dans les guides d'onde est progressivement coupée. Les deux pièges T1 et T2 se déplacent jusqu'à fusionner en un seul piège se situant au point de départ schématisé en t₁.

On applique ainsi des courants continus aux deux fils correspondant au point de croisement initial C1, et au cours du temps on applique successivement ces courants aux différents points de croisements Ci situés sur l'axe de symétrie, en appliquant simultanément une puissance microonde sur les guides d'ondes.

Pendant l'étape C0 les courants continus appliqués aux différents fils WIdi varient continûment (augmentation et diminution) entre 0 et une valeur maximale Idimax (normalisée à 1 sur la figure 3), tandis que le champ magnétique Bc et le courant I_{z} restent constants pendant la séquence. Dans toute la séquence A0, B0 et C0 les deux pièges T1 et T2 restent à l'altitude h.

Les deux pièges T1 et T2 se déplacent dans le sens « d'allumage » des points de croisement : du point de croissement C1 vers le point de croisement Cn. Le retour s'effectue en inversant les fréquences microonde et en allument les courants continus successivement dans les fils correspondants aux différents points de croissement en les parcourant de Cn vers C1.

On fait ainsi parcourir aux pièges la trajectoire fermée 16.

La trajectoire fermée 16 des atomes contient alors une aire A, la fonction d'onde atomique est donc :
$\frac{\left|a\right〉 + exp \left(iφ\right) \left|b\right〉}{\sqrt{2}}$

Avec :
$φ = {ω}_{0} t + \frac{m}{ℏ} {Ω}_{z} A$

Dans une **étape D0** on recombine les états internes la> et |b> en appliquant aux atomes ultrafroids une deuxième impulsion **π** / **2**, ce qui transfert la différence de phase sur les populations des deux niveaux atomiques :
${p}_{a} = \frac{1}{2} \left[1-cos\left(φ-ωt\right)\right]$
${p}_{b} = \frac{1}{2} \left[1+cos\left(φ-ωt\right)\right]$ où *ω* est la pulsation de l'impulsion *π*/2.

Les impulsions *π*/2 peuvent être envoyées aux atomes via les guides micro-ondes ou via un émetteur microonde séparé.

La séquence allant de la première à la deuxième impulsion *π*/2 inclus est la séquence de Ramsey (voir plus haut).

Puis dans une étape E0 on mesure la densité d'atomes dans au moins un état interne choisi parmi au moins la> et |b>. Cette mesure peut être effectuée par exemple par absorption laser en sondant la résonance entre la pulsation propre à un état interne et celle du laser. Puis on détermine la phase Sagnac des atomes ultrafroids et on calcule la vitesse de rotation du capteur selon l'axe Z.

La mesure d'au moins une population d'atomes dans un des états |a> ou |b> permet de déterminer la phase Sagnac, par exemple pour l'état interne |a> en considérant l'équation (1), puis la vitesse de rotation Ω_{z} avec l'équation (6).

On peut faire parcourir aux pièges cette trajectoire N fois avant de mesurer la phase Sagnac et ainsi mesurer une phase qui sera potentiellement N fois plus élevée.

Afin de mettre en œuvre le procédé décrit plus haut le capteur à atomes ultrafroids permettant une mesure de vitesse de rotation Ω_{z} comprend :
- une puce atomique 1 telle que décrite précédemment, avec les guides d'onde et les fils conducteurs,
- un dispositif de génération d'atomes pour générer le nuage d'atomes ultrafroids près du plan de mesure 13 de la puce atomique,
- un générateur du champ magnétique homogène Bc
- au moins un générateur de tension ou de courant continu adapté à commander des courants électriques dans les fils conducteurs et au moins un générateur de tension ou de courant micro-ondes connecté aux guides d'ondes,
- un système de détection, typiquement d'une intensité optique, adapté à mesurer au moins une population d'atomes ultrafroids dans un état interne, cette mesure permettant la détermination de la phase Sagnac et de la vitesse de rotation Ω_{z}.

Le capteur de type gyroscope comprend également au moins un processeur qui pilote le fonctionnement et la mise en œuvre du capteur, tel que le pilotage des signaux appliqués aux fils et aux guides microonde selon une séquence prédéterminée (par exemple la séquence de la figure 3 b).

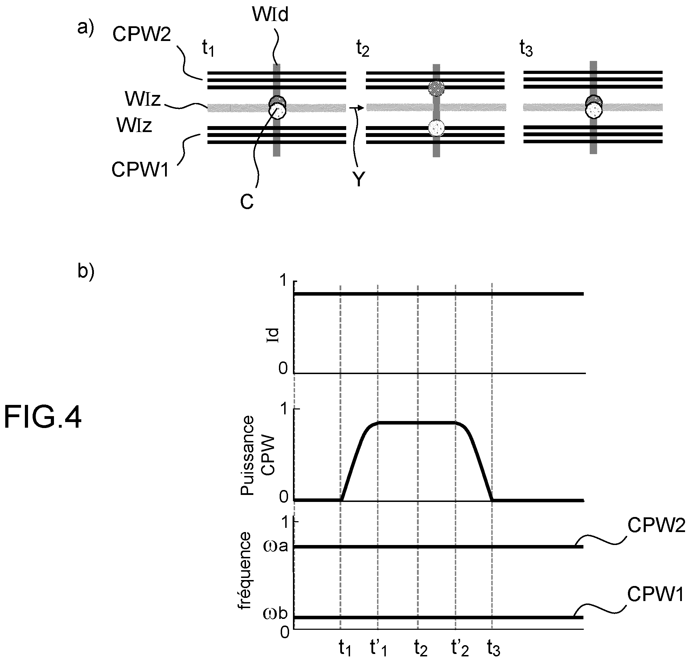

Un capteur de type accéléromètre présente un fonctionnement « simplifié » par rapport au gyroscope, car les deux nuages suivent une trajectoire rectiligne en aller-retour, comme illustré figure 4, qui reprend la même logique et le même formalisme que la figure 3. Ici un seul fil WId est nécessaire, définissant le point de croisement C.

La partie a) de la figure 4 présente schématiquement une séquence du déplacement de chacun des nuages d'atomes ultrafroids à des temps caractéristiques t₁ à t₃. La partie b) illustre la séquence des différents courants appliqués aux fils conducteurs, des puissances appliquées aux guides d'onde et des fréquences imposées aux guides d'onde, pour les temps correspondant à ceux de la partie a). Dans la séquence présentée dans la figure 4, le courant I_{z}, non présenté, circulant dans WIz est stationnaire, à une valeur constante. Le courant appliqué à WId est également constant pendant toute la séquence.

Au départ à t₁ aucune puissance n'est appliquée aux guides d'onde et le nuage est piégé au-dessus du point C.

Entre t₁ et t'1, la puissance micro-ondes injectée dans les guides d'onde CPW1 et CPW2, passe progressivement de 0 à sa valeur maximale, puis la valeur reste maximale et constante entre t'1 et t'2 en passant par t2. Une pulsation ωₐ est envoyée dans le guide d'onde CPW2 et une pulsation ω_{b} est envoyée dans le guide d'onde CPW1, ce qui permet de séparer les deux nuages d'états internes différents de part et d'autre de l'axe de symétrie Y jusqu'aux positions schématisées dans t₂, ces positons étant maintenues pendant toute la durée t'2-t'1, qui peut être faible.

Entre t'₂ et t₃, la puissance micro-onde dans les guides d'onde est progressivement coupée. Les deux pièges T1 et T2 se déplacent jusqu'à fusionner en un seul piège se situant au point de départ schématisé en t₁.

Pour les deux types de capteur, et de manière générale pour tout capteur inertiel, en considérant les formules 3, 4 et 5 on voit que la phase est sensible à la différence d'énergie entre les deux niveaux « habillés » E'b-E'a, qui s'exprime en fonction de la différence d'énergie entre les deux niveaux atomiques Ea-Eb :

Pour l'état |a> l'énergie est modifiée de Eₐ vers E'ₐ avec :
$E {′}_{a} = {E}_{a} + ℏ \frac{{Ω}_{a}^{2}}{4 {Δ}_{a}}$ (7)

Pour l'état |b> l'énergie est modifiée de E_{b} vers E'_{b} avec :
$E {′}_{b} = {E}_{b} - ℏ \frac{{Ω}_{b}^{2}}{4 {Δ}_{b}}$ (8) Où Ω*ₐ* (respectivement Ω*_{b}*) est la fréquence de Rabi associée à l'habillage de l'état la> (respectivement |b>). Pour alléger les notations tous les facteurs de couplages sont rangés dans la fréquence de Rabi, fonction de la racine carrée de la puissance microonde appliquée aux guides d'onde (amplitude du champ microonde).

Δ*ₐ* (respectivement Δ*_{b}*) est le désaccord entre la fréquence *ωₐ* (respectivement *ω_{b}*) du champ microonde habillant l'état |a> (respectivement l'état |b>) et la fréquence de la transition *ω*_{0*a*} (respectivement *ω*_{*b*0}) considérée pour l'habillage de l'état |a> (respectivement |b>). Les fréquences *ω*_{0*a*} et *ω*_{0*b*} sont les fréquences des transitions atomiques utilisées pour la mise en œuvre de l'interféromètre.

On a :
${Δ}_{a} = {ω}_{a} - {ω}_{0 a}$ (9)
${Δ}_{b} = {ω}_{b} - {ω}_{0 b}$ (10)

On dénomme *ω_{hfs}* la fréquence hyperfine de la transition utilisée.

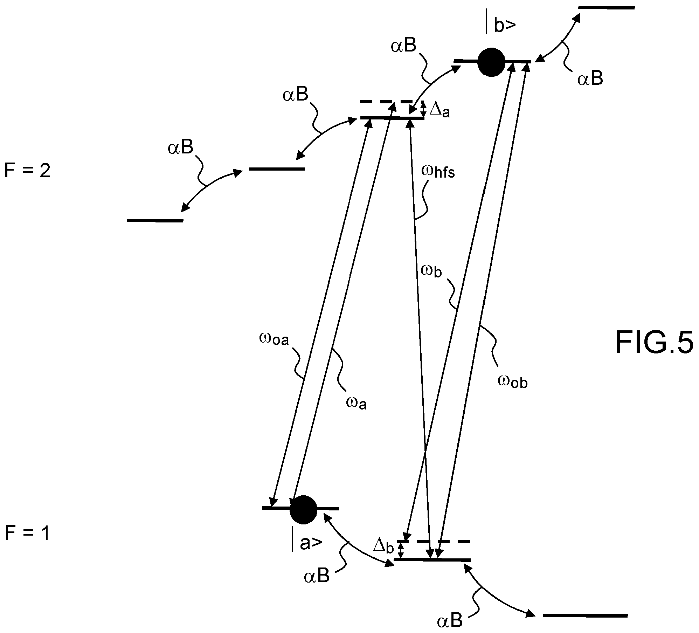

Un exemple de transition utilisée est la transition σ du Rubidium 87 entre deux niveaux hyperfins F=1 et F=2, tel qu'illustré figure 5, chaque niveau présentant des sous niveaux Zeeman séparés d'une même grandeur αB, avec pour le Rubidium 87 α = 700 kHz/G, B étant le champ magnétique continu, dit DC, auquel sont soumis les atomes. On a :
${ω}_{0 a} = {ω}_{hfs} - αB$ (11)
${ω}_{0 b} = {ω}_{hfs} + αB$ (12)

La différence d'énergie entre |a> et |b> à laquelle est sensible l'interféromètre de Ramsey, s'exprime alors:
$E {′}_{b} - E {′}_{a} = {E}_{b} - {E}_{a} + ℏ \frac{{Ω}_{a}^{2}}{4 {Δ}_{a}} + ℏ \frac{{Ω}_{b}^{2}}{4 {Δ}_{b}} = {E}_{b} - {E}_{a} - Δ E$ (13)

Avec
$Δ E = ℏ + \frac{{Ω}_{a}^{2}}{4 {Δ}_{a}} + ℏ \frac{{Ω}_{b}^{2}}{4 {Δ}_{b}}$ (14)

Le terme ΔE intervient dans les oscillations des populations données précédemment (formules 5 et 6), donc sur la phase, et est à l'origine du bruit de l'interféromètre.

En pratique, pour assurer le fonctionnement de l'interféromètre (pour garantir la symétrie) il convient de choisir ${Ω}_{a}^{2} = {Ω}_{b}^{2}$ et Δ*ₐ* = -Δ*_{b}* (voir par exemple la publication « Symmetric micowave potentials for interferometry with thermal atoms on a chip » Ammar et al, Phys. Rev. A 91, 053623; 2015). Ce choix présente l'avantage d'annuler le terme précédent et donc de retirer son effet. Cependant en pratique l'annulation de ce terme ΔE n'est pas parfaite et c'est ici que réside la difficulté. Cela est d'autant plus problématiquement qu'expérimentalement :
les puissances des deux champs microondes, qui sont proportionnelles à ${Ω}_{a}^{2}$ et ${Ω}_{b}^{2}$, ont un bruit, et l'égalisation des deux fréquences de Rabi n'est jamais parfaite ;
les deux termes de désaccord Δ*ₐ* et Δ*_{b}* font intervenir la valeur du champ magnétique DC piégeant les atomes qui contient aussi un bruit (voir formules 9 à 12) :
   ${Δ}_{a} = {ω}_{a} - {ω}_{hfs} - α B$ (15)
   ${Δ}_{b} = {ω}_{b} - {ω}_{hfs} + α B$ (16)

On voit dans les formules ci-dessus que le bruit de l'interféromètre provient d'une part du champ magnétique DC B, comprenant le champ magnétique homogène Bc appliqué aux atomes et le champ magnétique continu provenant des fils conducteurs (terme Δ) et d'autre part du champ microonde (terme Ω).

Les solutions actuelles pour réduire le bruit sur le champ magnétique DC consistent à utiliser les sources de courant les plus stable possible. Les solutions actuelles pour réduire le bruit sur l'amplitude de champ microonde consiste à faire des boucles d'asservissement sur l'amplitude du champ microonde pour le stabiliser du mieux possible.

C'est deux solutions ne sont pas satisfaisantes car bien qu'elles permettent de diminuer le niveau de bruit, ces bruits restent toujours présent dans le budget d'erreur du capteur.

Un but de la présente invention est de remédier aux inconvénients précités en proposant un capteur inertiel à atomes ultrafroids présentant un niveau de bruit atténué.

### DESCRIPTION DE L'INVENTION

La présente invention a pour objet un capteur à atomes ultrafroids comprenant :
- une puce atomique placée dans une enceinte à vide, comportant un plan XY dit plan de mesure normal à un axe Z, et comprenant :
   ∘ un premier et un deuxième guide d'ondes adaptés à la propagation d'ondes hyperfréquences et de courants continus,
   ∘ au moins un premier fil conducteur et un deuxième fil conducteur dont les projections respectives sont sécantes en un point définissant un premier point de croisement,
- un dispositif de génération d'atomes configuré pour générer un nuage d'atomes ultrafroids près dudit plan XY de ladite puce atomique,
- un générateur d'un champ magnétique homogène,
- un dispositif d'alimentation comprenant au moins un générateur microonde et au moins un générateur de courant continu, le dispositif d'alimentation étant configuré pour :
   o appliquer auxdits premier et deuxième guides d'ondes des signaux microonde et des courants électriques continus dit courants CMW,
   o appliquer auxdits fils conducteurs des courants continus dits courants CWI,

lesdits guides d'ondes, lesdits fils conducteurs et ledit dispositif d'alimentation étant configurés, lors de la mise en œuvre du capteur, pour séparer spatialement un premier nuage d'atomes ultrafroids dans un premier état interne d'un deuxième nuage d'atomes ultrafroids dans un deuxième état interne, en formant respectivement un premier et deuxième pièges à atomes ultrafroids en modifiant une énergie desdits atomes ultrafroids, et pour déplacer lesdits pièges suivant une trajectoire linéaire ou fermée comprise dans un plan perpendiculaire à Z,
ledit dispositif d'alimentation étant configuré pour appliquer auxdits premier et deuxième guides d'ondes, pour la séparation spatiale des deux pièges, lesdits signaux microonde pour initier ladite séparation spatiale, puis lesdits courants électriques CMW à la place desdits signaux microonde pour le maintien de ladite séparation spatiale,
le capteur comprenant en outre un système de détection adapté à mesurer au moins une population de dits atomes ultrafroids dans un dit état interne.

Selon un mode de réalisation le capteur est de type accéléromètre, la trajectoire suivie par les deux pièges étant linéaire.

Selon un autre mode de réalisation la capteur est de type gyroscope comprenant une pluralité de deuxième fils conducteurs définissant une pluralité de points de croisement, ladite trajectoire suivie par les deux pièges étant fermée et parcourue en sens inverse par le premier et le deuxième piège.

Selon un mode de réalisation chaque guide d'onde comprend trois fils, deux fils extérieurs de masse et un fil signal intérieur, le courant CMW étant injecté dans le fil signal.

Selon un mode de réalisation le dispositif d'alimentation comprend en outre au moins un té de polarisation relié audit au moins un générateur microonde et audit au moins un générateur de courant continu, et configuré pour appliquer lesdits signaux microondes et lesdits courants CMW auxdits guide d'ondes.

Selon un autre aspect l'invention concerne un procédé de mesure d'un paramètre inertiel par un capteur à atomes ultrafroids comprenant une puce atomique placée dans une enceinte à vide, comportant un plan XY normal à un axe Z dit plan de mesure, ladite puce atomique comprenant :
- un premier et un deuxième guide d'ondes adaptés à la propagation d'ondes hyperfréquences et de courants continus,
- au moins un premier fil conducteur (W1) et un deuxième fil conducteur dont les projections respectives sont sécantes en un point définissant un premier point de croisement,
le procédé comprenant les étapes consistant à :
A Générer un nuage d'atomes ultrafroids près dudit plan XY de ladite puce atomique, incluant des phases d'émission desdits atomes, de refroidissement desdits atomes, d'initialisation desdits atomes dans au moins un premier état interne, et de piégeage d'un nuage de dits atomes ultrafroids dans un minimum local de potentiel, à une hauteur maîtrisée dudit plan XY, ledit piégeage s'effectuant par passage de courants continus dans le premier et le deuxième fil conducteurs,
**B** Initialiser le premier état interne et un deuxième état interne desdits atomes ultrafroids en superposant de manière cohérente lesdits atomes ultrafroids entre lesdits premier et deuxième états internes par une impulsion π/2,
**C** Séparer spatialement un premier nuage d'atomes ultrafroids dans le premier état interne d'un deuxième nuage d'atomes ultrafoirds dans le deuxième état interne, en formant respectivement un premier et deuxième pièges à atomes ultrafroids en modifiant des énergies desdits atomes ultrafroids, et déplacer lesdits pièges suivant une trajectoire linéaire ou fermée comprise dans un plan perpendiculaire à Z et initialisée au premier point de croisement,
   ladite étape de séparation et de déplacement des atomes ultrafroids s'effectuant en appliquant, selon une séquence prédéterminée, un champ magnétique homogène auxdits atomes ultrafroids, des courants continus, dit courants CWI, auxdits fils conducteurs, et des signaux microonde (I_{MW}) et des courants électriques continus, dit courants CMW, auxdits guides d'onde,
   l'étape de séparation comprenant une sous étape d'initialisation comprenant l'application desdits signaux microonde auxdits guides d'onde, et une sous étape de maintien comprenant l'application desdits courants CMW à la place desdits signaux microonde,
D Recombiner lesdits premier et deuxième états internes en appliquant auxdits atomes ultrafroids une deuxième impulsion π/2,
E Mesurer au moins une population de dits atomes ultrafroids dans au moins un dit état interne.

Selon un mode de réalisation l'étape de séparation comprend une sous étape transitoire entre la sous étape d'initialisation et la sous étape de maintien, comprenant une extinction des signaux microondes et un allumage des courants CMW.

Selon un premier mode de réalisation, pendant l'étape transitoire, l'extinction des signaux microondes et l'allumage des courants CMW s'effectuent simultanément. Selon un mode de réalisation l'étape transitoire présente une durée inférieure à 100 µs.

Selon un deuxième mode de réalisation, pendant l'étape transitoire, ladite extinction des signaux microondes s'opère préalablement ou postérieurement audit allumage des courants CMW.

Selon un mode de réalisation, lors de l'étape de déplacement, une recombinaison spatiale des deux nuages s'opère en éteignant progressivement les courants CMW.

Selon un mode de réalisation, lors de l'étape de déplacement, une recombinaison spatiale des deux nuages s'opère en éteignant les courants CMW et en rallumant simultanément les signaux microonde, puis en éteignant progressivement les signaux microonde.

La description suivante présente plusieurs exemples de réalisation du dispositif de l'invention : ces exemples sont non limitatifs de la portée de l'invention. Ces exemples de réalisation présentent à la fois les caractéristiques essentielles de l'invention ainsi que des caractéristiques additionnelles liées aux modes de réalisation considérés.

L'invention sera mieux comprise et d'autres caractéristiques, buts et avantages de celle-ci apparaîtront au cours de la description détaillée qui va suivre et en regard des dessins annexés donnés à titre d'exemples non limitatifs et sur lesquels :
La figure 1 déjà citée illustre un exemple la topologie d'une puce atomique comprenant des fils conducteurs et des guides microondes permettant le déplacement des pièges magnétiques selon une trajectoire fermée.
La figure 2 déjà citée illustre la géométrie des guides et fils de la puce atomique ainsi que les pièges T1 et T2.
La figure 3 déjà citée illustre dans sa partie inférieure un exemple d'application des différents signaux aux fils et guides selon l'état de l'art, dans le cas d'un capteur de type gyroscope, pour faire parcourir la trajectoire fermée aux deux pièges T1 et T2 (et donc aux deux nuages d'atomes piégés), et dans sa partie supérieure la position des deux nuages correspondant à des temps choisis.
La figure 4 déjà citée illustre dans sa partie inférieure un exemple d'application des différents signaux aux fils et guides selon l'état de l'art pour faire parcourir, dans le cas d'un capteur de type accéléromètre, la trajectoire linéaire aux deux pièges T1 et T2 (et donc aux deux nuages d'atomes piégés), et dans sa partie supérieure la position des deux nuages correspondant à des temps choisis.
La figure 5 déjà citée illustre la transition σ du Rubidium 87 entre deux niveaux hyperfins F=1 et F=2 utilisée pour un capteur inertiel à atomes froids, ainsi que les différentes fréquences d'intérêt.

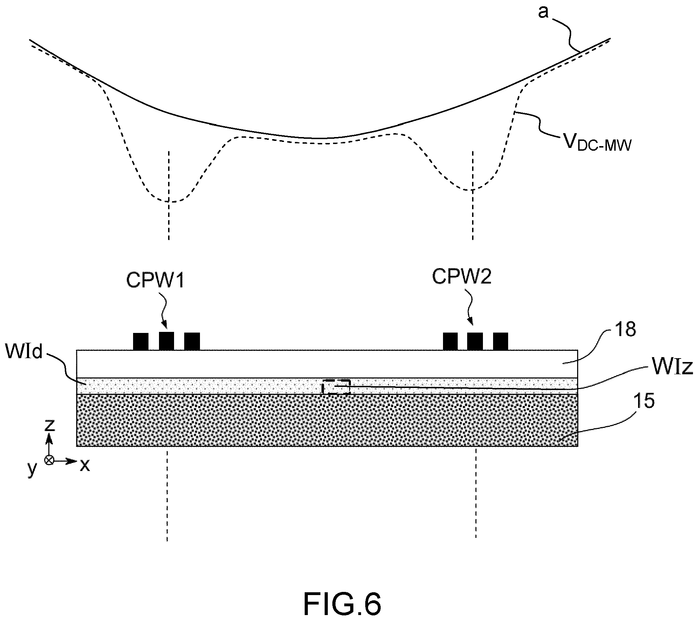

La figure 6 illustre le potentiel magnétique DC V_{DC-MW} créé par l'application de de courants continus aux guides d'onde.

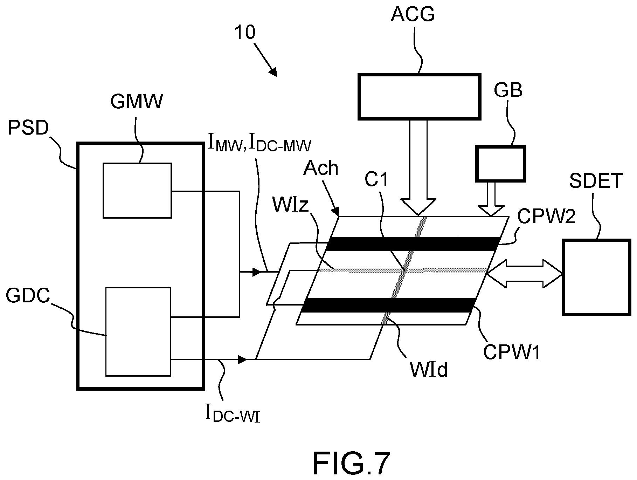

La figure 7 illustre un capteur à atomes ulltrafroids 10 selon l'invention.

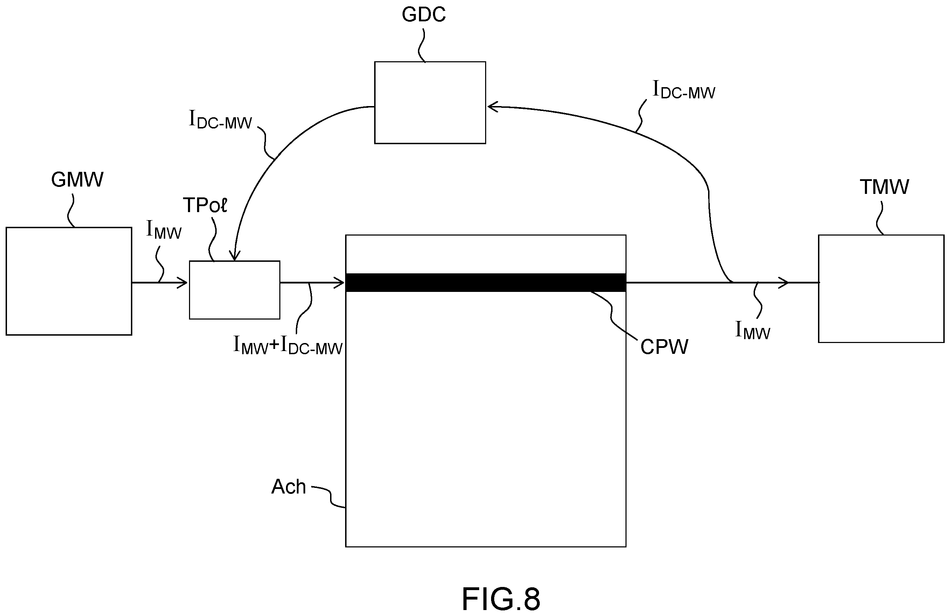

La figure 8 illustre le schéma de principe d'un mode de réalisation du capteur selon l'invention dans lequel la superposition d'un courant microonde et d'un courant continu dans le fil signal du guide d'onde se fait avec un té de polarisation

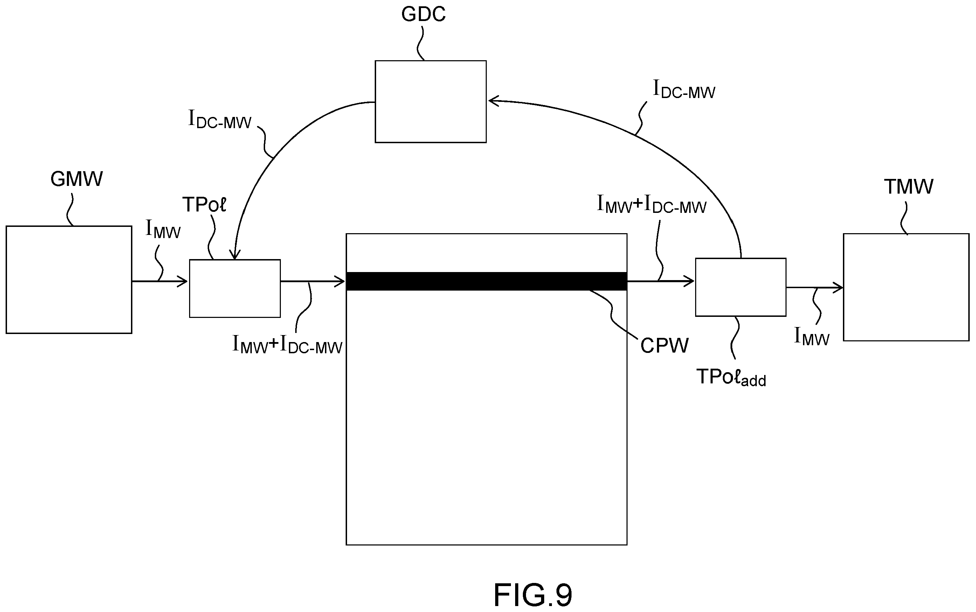

La figure 9 illustre un mode de réalisation dans lequel un té de polarisation additionnel TPol_{add} a été intégré à la sortie du guide d'onde et avant la terminaison TMW.

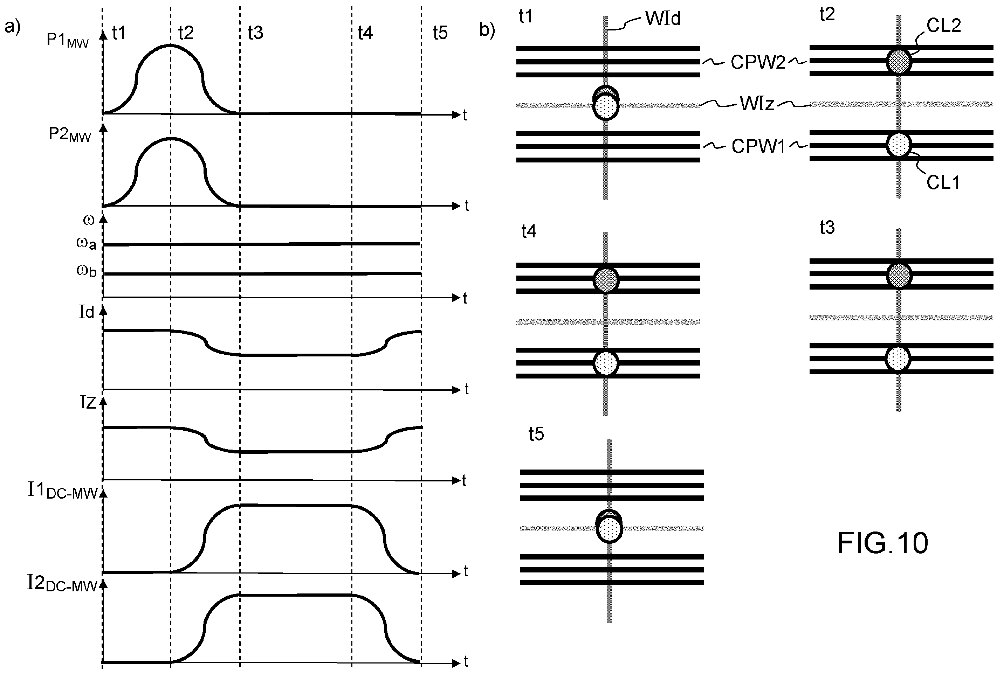

La figure 10 illustre sur sa partie gauche les chronogrammes d'application des différents signaux lors de la mise en œuvre d'un capteur de type accéléromètre selon la première variante de recombinaison spatiale, et sur sa partie droite le déplacement des deux nuages à des instants choisis.

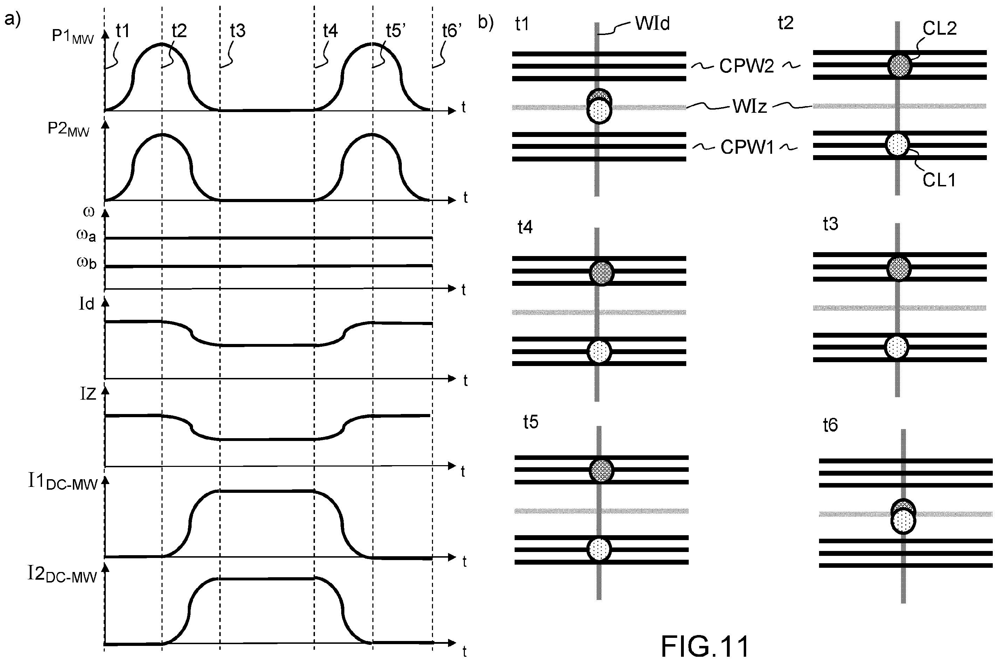

La figure 11 illustre sur sa partie gauche les chronogrammes d'application des différents signaux lors de la mise en œuvre d'un capteur de type accéléromètre selon la deuxième variante de recombinaison spatiale, et sur sa partie droite le déplacement des deux nuages à des instants choisis.

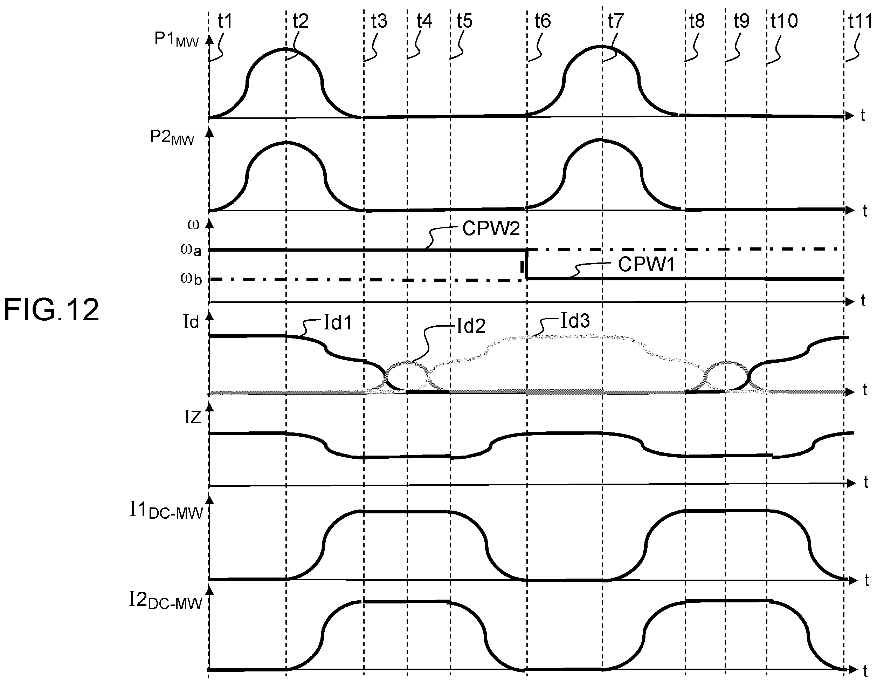

La figure 12 illustre les chronogrammes d'application des différents signaux pour la mise en œuvre d'un capteur de type gyroscope, selon la première variante de recombinaison spatiale.

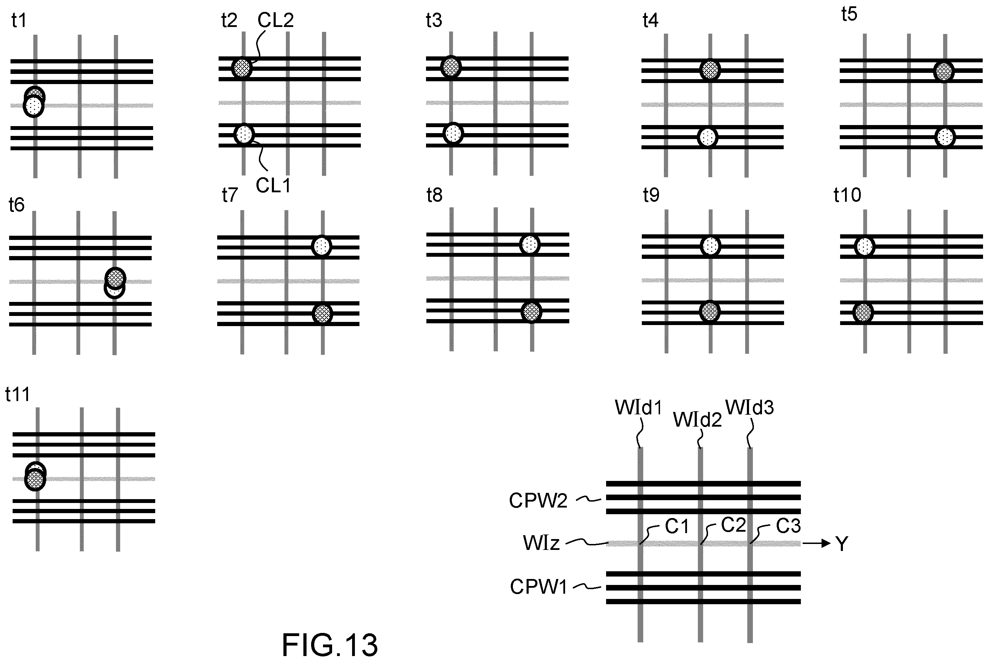

La figure 13 illustre les déplacements des deux nuages à des instants choisis associés aux signaux de la figure 12.

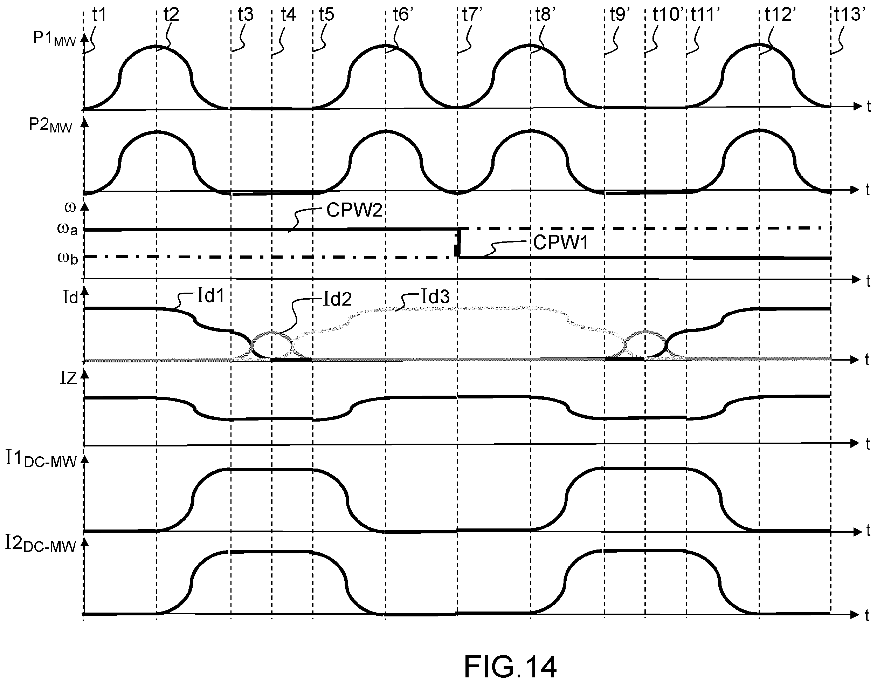

La figure 14 illustre les chronogrammes d'application des différents signaux pour la mise en œuvre d'un capteur de type gyroscope selon la deuxième variante de recombinaison spatiale.

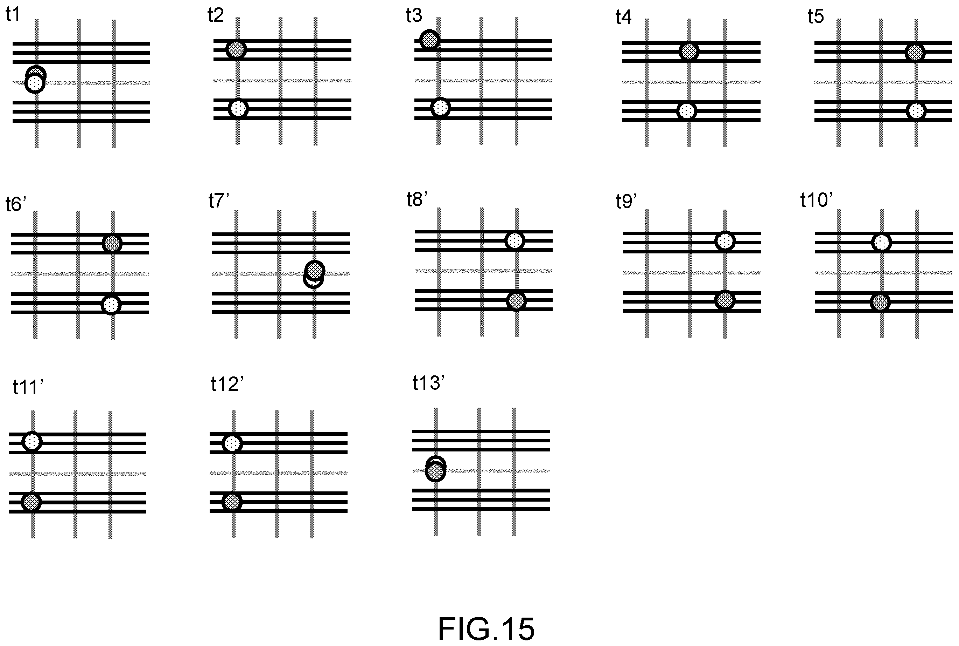

La figure 15 illustre les déplacements des deux nuages à des instants choisis associés aux signaux de la figure 14.

### DESCRIPTION DETAILLEE DE L'INVENTION

On décompose le temps Ramsey T_{R} en deux temps, un temps T_{R}^{off} pendent lequel aucun signal microonde n'est appliqué aux guide d'onde, et un temps T_{R}^{on} pendant lequel des signaux microondes sont appliqués aux guides :
${T}_{R} = {T}_{R}^{On} + {T}_{R}^{Off}$

Le bruit N accumulé sur la phase de l'interféromètre est donné par :
$N = {σ}_{DC} {T}_{R} + {σ}_{MW} {T}_{R}^{On}$ (17) avec σ_{MW} le bruit de phase de l'interféromètre intégrant le bruit produit par les signaux microondes (uniquement pendant T^{on}) et σ_{DC} le bruit dû au champ magnétique continu seul (présents pendant toute la séquence).

L'unité de σ_{MW} et σ_{DC} est le Hz.

A partir de la formule 14, en considérant qu'il y a une erreur ou un bruit *δB* sur le champ magnétique DC et des erreurs ou bruit *δ*Ω*ₐ* et *δ*Ω*_{b}* sur Ω*ₐ* et Ω*_{b}*, on peut réécrire la différence des deux déplacements ΔE sous la forme :
$Δ E = \frac{ℏ}{4} \left[\frac{{Ω}_{a}^{2}}{{Δ}_{a}}+\frac{{Ω}_{b}^{2}}{{Δ}_{b}}+\frac{2 {Ω}_{a}}{{Δ}_{a}}δ{Ω}_{a}+\frac{2 {Ω}_{b}}{{Δ}_{b}}δ{Ω}_{b}+αδB\left(\frac{{Ω}_{a}^{2}}{{Δ}_{a}^{2}}+\frac{{Ω}_{b}^{2}}{{Δ}_{b}^{2}}\right)\right]$

Ont été négligé l'effet des bruits ou erreurs sur *ωₐ* et *ω_{b}* car expérimentalement leurs effets sont négligeables.

Le terme *σ_{MW}* , avec :
${σ}_{MW} = \frac{2 {Ω}_{a}}{{Δ}_{a}} δ {Ω}_{a} + \frac{2 {Ω}_{b}}{{Δ}_{b}} δ {Ω}_{b} + αδB \left(\frac{{Ω}_{a}^{2}}{{Δ}_{a}^{2}}+\frac{{Ω}_{b}^{2}}{{Δ}_{b}^{2}}\right)$ (18)
constitue alors un bruit sur la phase de l'interféromètre, auquel il convient d'ajouter les bruits sur les autres termes contenus dans la phase de l'interféromètre c'est-à-dire dans la différence d'énergie *E_{b}* - *Eₐ*. Pour simplifier on néglige le shift collisionnel, le bruit de détection, l'effet Dicke ... et on ne garde que le terme correspondant à la différence d'énergie en présence du champ magnétique DC. Le bruit sur ce terme (champs microonde éteints) fait uniquement intervenir le bruit sur le champ magnétique DC *δB* et est de la forme (voir par exemple la publication « Magnetically trapped atoms for compact atomic clocks » P. Rosenbusch, Apppl. Phys. B (2009), 95, p 227-235) :
${σ}_{DC} = 2 b \left(B-{B}_{m}\right) δB$ (19)

Pour mettre des ordres de grandeurs sur les différents bruits on a avec l'exemple du Rubidium 87 :
$b = 431 Hz / {G}^{2} ,$
le champ magnétique DC est proche de *Bₘ* = 3,23 *G.*
${Δ}_{a} = - {Δ}_{b} = 200 kHz$
${Ω}_{a} = 50 kHz et {Ω}_{b} = 50 kHz$
$δB = 1 mG$
$B - {B}_{m} = 100 mG$
$δ {Ω}_{a} / {Ω}_{a} = δ {Ω}_{b} / {Ω}_{b} = {10}^{- 3}$

Ce qui donne :
$\frac{2 {Ω}_{a}}{\left|{Δ}_{a}\right|} δ {Ω}_{a} + \frac{2 {Ω}_{b}}{\left|{Δ}_{b}\right|} δ {Ω}_{b} + αδB \left(\frac{{Ω}_{a}^{2}}{{Δ}_{a}^{2}}+\frac{{Ω}_{b}^{2}}{{Δ}_{b}^{2}}\right) \approx 100 Hz$
Et
$2 b \left(B-{B}_{m}\right) δB \approx 100 mHz$

On constate que la présence des deux champs microonde augmente fortement le niveau de bruit. C'est le facteur prépondérant qu'il convient de réduire.

L'idée de l'invention est de réduire le niveau de bruit en remplaçant les champs microondes (après séparation des deux états) par des courants DC afin de créer deux pièges magnétiques contenant chacun un état.

Ainsi, pendant toute la phase où les deux états la> et |b> sont maintenus séparés, les deux champs microonde servant à l'habillage sont coupés. Pendant cette phase de l'interféromètre, la phase n'est plus sensible aux bruits sur le champ magnétique DC *δB,* ni sur l'amplitude des champs microondes *δ*Ω*ₐ* et *δ*Ω*_{b}* via le terme de bruit *σ_{MW},* mais le terme *σ_{DC}* reste lui sensible à *δB.*

Des signaux microondes, typiquement des courants microonde I_{MW}, sont d'abord appliqués pour effectuer la séparation des deux nuages (initialisation de la séparation spatiale), tel qu'illustré figures 3 et 4 à partir de t₁ et jusqu'à t₂. Cette étape d'allumage progressif des guides d'ondes est similaire à ce qui a été décrit dans l'état de la technique.

Puis selon l'invention les courants I_{MW} sont coupés et on applique à la place aux guides microondes CPW1 et CPW2 des courants continus I_{DC}-_{MW}. Avant et pendant le changement de type de courant appliqué au guide d'onde, on applique des courants continus aux fils conducteurs.

Il est important d'utiliser des courants microondes pour la séparation initiale des deux états |a> et |b> de l'interféromètre car les courants microondes permettent de créer des pièges sélectifs de l'état interne ce que ne permettent pas les courants DC. Il est important de créer des pièges sélectifs de l'état interne au début de la séparation sinon les deux états resteraient mélangés après la séparation.

Le potentiel magnétique DC V_{DC-MW} créé par l'application de ces courants continus I_{DC-Mw} aux guides d'onde est illustré figure 6. Ce potentiel magnétique V_{DC-MW} remplace le potentiel magnétique DC créé par les champs microonde issus de l'application des courants microonde I_{MW}, illustrés par les courbes c) et e) de la figure 2a). Le potentiel magnétique V_{DC-MW} permet de continuer à piéger les atomes froids et de maintenir la séparation spatiale des deux nuages autant que nécessaire pendant le reste de la séquence Ramsey. La courbe a) reprise de la figure 2 a) illustre le potentiel magnétique DC créé par l'application de courants continus dans les deux fils conducteurs (début de la séquence, avant la séparation des nuages et donc avant l'allumage des courants microondes).

La figure 7 illustre un capteur à atomes ulltrafroids 10 selon l'invention. Le capteur 10 comprend une puce atomique ACh placée dans une enceinte à vide, présentant un plan XY dit plan de mesure normal à un axe Z. La puce Ach présente un premier guide d'onde CPW1 et un deuxième guide d'onde CPWX2 adaptés à la propagation d'ondes hyperfréquences et de courants continus, et au moins un premier fil conducteur WIz et un deuxième fil conducteur WId dont les projections respectives sont sécantes en un point définissant un premier point de croisement C1. Les deux guides d'ondes sont disposés symétriquement à un axe Y, typiquement mais non limitativement ils sont parallèles entre eux. Le capteur comprend également un dispositif de génération d'atomes ACG configuré pour générer un nuage CL d'atomes ultrafroids près dudit plan XY de ladite puce atomique et un générateur GB d'un champ magnétique homogène Bc.

Le capteur 10 selon l'invention comprend également un dispositif d'alimentation PSD comprenant au moins un générateur microonde GMW et au moins un générateur de courant continu GDC. Il peut y avoir un générateur microonde par guide ou un générateur commun aux deux guides. De même il peut y avoir un seul générateur GDC commun pour tous les fils et les guides d'onde, ou plusieurs générateurs.

Le dispositif d'alimentation PSD est configuré pour appliquer aux guides d'ondes CPW1 et CPW2 des signaux microonde, typiquement des courants I_{MW}, et des courants électriques continus I_{DC-MW} dits courants CMW, et pour appliquer aux fils conducteurs des courants continus I_{DC-WI} dits courants CWI.

Les guides d'ondes, les fils conducteurs et le dispositif d'alimentation sont configurés, lors de la mise en œuvre du capteur, i) pour séparer spatialement un premier nuage d'atomes ultrafroids CL1 dans un premier état interne la> d'un deuxième nuage d'atomes ultrafoirds CL2 dans un deuxième état interne |b>, en formant respectivement un premier piège à atomes ultrafroids T1 et un deuxième piège T2 en modifiant l'énergie des atomes, et ii) pour déplacer les pièges (T1, T2) suivant une trajectoire linéaire ou fermée comprise dans un plan perpendiculaire à Z.

Selon l'invention le dispositif d'alimentation PSD est configuré pour appliquer aux premier et deuxième guides d'ondes, pour la séparation spatiale des deux pièges, les signaux microonde I_{MW} pour initier la séparation spatiale, puis les courants électriques CMW I_{DC-MW} à la place des signaux (courants) microonde I_{MW} pour le maintien de la séparation spatiale.

Enfin le capteur 10 selon l'invention comprend un système de détection SDET adapté à mesurer au moins une population de dits atomes ultrafroids dans un dit état interne.

Le capteur à atomes froid présente une structure identique à celle décrite dans l'état de la technique, avec la différence que les guides d'ondes sont aptes à la propagation de courants continus et que le dispositif d'alimentation permet d'appliquer des courants continus aux guides d'onde comme revendiqué.

Grâce à l'application de courants continus aux guides à la place de l'application de signaux microonde (hyperfréquence) pendant une bonne partie de la séquence de Ramsey, la composante de bruit due à ces signaux ${σ}_{MW} {T}_{R}^{On}$ (formule 17) est considérablement réduite du fait la diminution de ${T}_{R}^{On}$. On réduit ainsi la quantité de bruit accumulée sur la phase de l'interféromètre. Il a été montré plus haut que cette composante de bruit est celle qui limite la mesure, et tout gain sur cette composante de bruit se traduit directement en un gain de sensibilité de mesure.

Un premier type de capteur selon l'invention est un accéléromètre, la trajectoire suivie par les deux pièges est linéaire comme illustré figure 4 a). Deux fils sécants en C1 IWz et Iwd sont nécessaires pour définir le point de départ/ arrivée de la trajectoire, et le déplacement est ici confondu avec la séparation spatiale.

Un deuxième type de capteur est un gyroscope. La puce atomique comprend alors une pluralité de deuxième fils conducteurs Wldi (WId1, WId2, WId3) définissant une pluralité de points de croisement Ci (C1, C2, C3) comme illustré figure 1, et la trajectoire suivie par les deux pièges est fermée et parcourue en sens inverse par les deux pièges, comme décrit figure 3 a).

Le gyroscope selon l'invention est compatible de toute géométrie de puce atomique comprenant deux guides microondes et des fils conducteurs, telle que décrite dans les documents US 15/778605, US 17/924340, US 17/832615 et US 17/832616 précités.

Lors de la mise en œuvre du capteur selon l'invention, la séparation des deux nuages s'opère avec les signaux microonde et une fois les nuages séparés, la séparation est maintenue avec les courants continus CMW appliqués aux guides d'onde. La coupure des champs microondes et leurs remplacements par deux courants DC peut se faire de trois manières différentes.

Dans une première variante le dispositif d'alimentation PSD est configuré de sorte que l'extinction des signaux microondes s'opère simultanément à l'allumage des courants électriques continus. Ce mode permet un extinction rapide des courants microondes, donc de réduire ${T}_{R}^{On}$ (voir l'équation (17)) et donc de réduire l'accumulation de bruit du au terme *σ_{MW}.*

Selon un premier mode de réalisation le temps tₜᵣₐₙₛ pendant lequel s'opère simultanément l'extinction et allumage est rapide, ce qui signifie que le front montant ou descendant est rapide devant les fréquences du piège magnétique. Il faut typiquement que tₜᵣₐₙₛ soit inférieur ou égal à 100 µs.

Selon un deuxième mode de réalisation l'extinction et allumage simultané s'opèrent avec deux rampe lentes (une rampe lente de RF descende et en même temps une rampe montante de DC), ce qui signifie qu'il faut que les rampes soient lentes devant les fréquences du piège magnétique. Il faut typiquement que tₜᵣₐₙₛ soit au moins de 10 ms.

Entre ces deux valeurs de tₜᵣₐₙₛ selon un troisième mode de réalisation les rampes présentent des formes complexes pour faire des raccourcis adiabatiques.

Dans une seconde variante le dispositif d'alimentation PSD est configuré de sorte que l'extinction des signaux microondes s'opère préalablement à l'allumage des courants électriques CMW. Ce mode permet une extinction encore plus rapide des courants microondes que le premier mode, mais complique le transfert entre les pièges utilisant les courants microondes I_{MW} et les pièges utilisant les courants DC I_{DC-MW}. On dénomme tᵢₙₜ le temps pendant lequel rien n'est appliqué. Il convient que ce temps soit inférieur à l'inverse de la fréquence du piège ωₚ. La fréquence du piège illustre sa « raideur ». La forme du potentiel magnétique réalisant le piège est approximée au voisinage du minimum par une parabole. Soit r la distance au minimum de potentiel V₀, on peut écrire le potentiel comme :
$V = {V}_{0} + \frac{1}{2} {mω}_{p}^{2} {r}^{2}$

Ainsi il convient que :
${t}_{int} \leq \frac{1}{{ω}_{p}}$

Dans une troisième variante le dispositif d'alimentation PSD est configuré de sorte que l'extinction des signaux microondes s'opère postérieurement à l'allumage des courants électriques CMW. Ce mode simplifie le transfert entre les pièges utilisant les courants microondes I_{MW} et les pièges utilisant les courants DC I_{DC-MW}.

Selon un mode de réalisation chaque guide d'onde comprend trois fils, deux fils extérieurs de masse et un fil signal intérieur, et le courant continu CMW est injecté dans le fil signal (guides coplanaires). Mais le capteur 10 selon l'invention peut intégrer tout type de guide microonde compatible avec l'application de courants continus, tel que des microrubans.

Selon un mode de réalisation la superposition d'un courant microonde et d'un courant continu dans le fil signal du guide d'onde se fait avec un té de polarisation. Ainsi le dispositif d'alimentation PSD comprend en outre au moins un té de polarisation TPol relié au générateur microonde et au générateur de courant continu, et configuré en entrée de chaque guide pour appliquer le signal microonde (courant microonde I_{MW}) et le courant CMW (courant continu I_{DC-MW}) aux guide d'ondes, tel qu'illustré sur le schéma de principe de la figure 8. Un té de polarisation est un composant comportant deux entrées, une pour un courant DC, l'autre pour un courant oscillant et une sortie permettant d'obtenir la superposition du courant DC et du courant oscillant. La sortie peut aussi être utilisée comme une entrée pour la superposition du courant DC et du courant oscillant, les deux entrées sont alors deux sorties l'une donnant le courant DC et l'autre le courant oscillant. Afin d'éviter des réflexions non désirées du signal hyperfréquence ayant traversé les guides microondes on intègre une terminaison microonde TMW en sortie de puce atomique comme également illustré figure 8.

Préférentiellement pour assurer une bonne séparation entre les courants continus et les signaux microonde en sortie du guide microonde on intègre un té de polarisation additionnel TPol_{add} à la sortie du guide d'onde et avant la terminaison TMW, comme illustré sur le schéma de principe de la figure 9.

Selon, un autre aspect l'invention concerne un procédé de mesure d'un paramètre inertiel par un capteur à atomes ultrafroids selon l'invention tel que décrit précédemment. Le procédé comprend une première étape A consistant à générer un nuage CL d'atomes ultrafroids près du plan XY de la puce atomique, incluant des phases d'émission des atomes, de refroidissement des atomes, d'initialisation des atomes dans au moins un premier état interne, et de piégeage d'un nuage d'atomes ultrafroids dans un minimum local de potentiel, à une hauteur maîtrisée du plan XY de mesure, le piégeage s'effectuant par passage de courants continus dans le premier et le deuxième fil conducteurs. Cette étape est similaire à l'étape A0 décrite dans l'état de la technique.

Dans une étape **B** on initialise le premier état interne la> et le deuxième état interne |b> des atomes ultrafroids en superposant de manière cohérente les atomes ultrafroids entre les premier et deuxième états internes par une impulsion π/2. Cette étape est similaire à l'étape B0 décrite dans l'état de la technique.

Dans une étape C on sépare spatialement le premier nuage d'atomes ultrafroids dans le premier état interne du deuxième nuage d'atomes ultrafoirds dans le deuxième état interne, en formant respectivement un premier pièges à atomes ultrafroids T1 et deuxième piège à atomes ultrafroids T2. Cette séparation s'effectue en modifiant les énergies des atomes ultrafroids. Puis on déplace les pièges (T1, T2) suivant une trajectoire linéaire (accéléromètre) ou fermée (gyroscope) comprise dans un plan perpendiculaire à Z et initialisée au premier point de croisement.

L'étape C de séparation et de déplacement des atomes ultrafroids s'effectue en appliquant, selon une séquence prédéterminée :
- un champ magnétique homogène Bc aux atomes ultrafroids,
- des courants continus, dit courants CWI, aux fils conducteurs,
- des signaux microonde, typiquement des courants microonde I_{MW}, et des courants électriques continus, dit courants CMW, aux guides d'onde.

Dans le procédé selon l'invention l'étape de séparation comprend une sous étape d'initialisation **Cinit** comprenant l'application des signaux microonde auxdits guides d'onde, et une sous étape de maintien **Cmaint** comprenant l'application des courants électriques CMW à la place desdits signaux microonde. L'originalité du procédé selon l'invention se situe dans l'étape C de séparation et de déplacement, et particulièrement dans l'étape Cmaint.

Dans une étape D on recombine les premier et deuxième états internes (les deux nuages sont alors à nouveaux spatialement confondus une fois la trajectoire parcourue) en appliquant aux atomes ultrafroids une deuxième impulsion π/2, ce qui clôt la séquence de Ramsey initialisée avec la première impulsion π/2. Cette étape est similaire à l'étape D0 décrite dans l'état de la technique.

Enfin dans une étape E on procède à la mesure d'au moins une population d'atomes ultrafroids dans au moins un dit état interne, de laquelle on déduit une valeur d'un paramètre inertiel (accélération, vitesse et/ou angle de rotation par rapport à un axe donné). Cette étape est similaire à l'étape E0 décrite dans l'état de la technique.

Dans le procédé selon l'invention la séquence usuelle servant à séparer et recombiner les deux états la> et |b> est modifiée.

La séquence usuelle consiste à :
- Allumer progressivement les deux champs microondes chacun dans un guide d'onde (CPW1 et CPW2) de la puce, cela permet de séparer les deux états |a> et |b> ;
- Maintenir les deux champs microondes dans les guides CPW1 et CPW2 pour maintenir les deux états la> et |b> séparés (cette séparation avec les champs microondes est représentée sur la figure 2 a));
- Eteindre progressivement les deux champs microondes pour recombiner spatialement les deux états la> et |b> . Cette recombinaison spatiale est différente de la recombinaison de l'étape D. La recombinaison spatiale a lieu une fois juste avant l'étape D pour l'accéléromètre (instant t₃ de la figure 4 a)), et a lieu deux fois lors du parcours de la trajectoire fermée pour le gyromètre (instant t₅ et t₉ de la figure 3 a)).

La séquence selon l'invention est, pour l'exemple d'un guide d'onde coplanaire à trois fils, décrite ci-dessous.
- Allumer progressivement les deux champs microonde chacun dans un guide d'onde de la puce, cela permet de séparer les deux états la> et |b> ;
- Une fois les états séparés, couper, préférentiellement rapidement, les deux champs micro-ondes et allumer, préférentiellement en même temps et rapidement, un courant DC dans les deux lignes de signal des deux guides microondes. Cela permet de créer deux pièges magnétiques DC séparés, contenant chacun un des deux états internes la> et |b> (ces deux pièges sont représentés sur la figure 6) ;
- Recombiner spatialement les deux états, lors de l'étape de déplacement, selon deux variantes :

Selon une première variante en éteignant progressivement les deux courants DC parcourant les deux lignes de signal des deux guides microondes;

Selon une deuxième variante en éteignant, préférentiellement rapidement, les deux courants DC parcourant les deux lignes de signal des deux guides microondes et, préférentiellement en même temps, en rallumant rapidement les deux champs microondes, puis en éteignant progressivement les deux champs microondes pour recombiner les deux états la> et |b>.

Préférentiellement l'étape de séparation du procédé selon l'invention comprend une sous étape transitoire Ctrans entre la sous étape d'initialisation Cinit et la sous étape de maintien Cmaint, comprenant l'extinction des signaux microondes et l'allumage des courants CMW.

La coupure des champs microondes et leurs remplacements par deux courants DC peut se faire selon les trois variantes décrites précédemment :

Première variante: pendant l'étape transitoire, l'extinction des signaux microondes et l'allumage des courants CMW s'effectuent simultanément. Préférentiellement l'étape transitoire présente une durée inférieure à 100 µs.

Deuxième variante : pendant l'étape transitoire, l'extinction des signaux microondes s'opère préalablement à l'allumage des courants CMW.

Troisième variante: pendant l'étape transitoire, l'extinction signaux MW postérieurement à l'allumage courants CMW

Nous allons à présent illustrer le procédé selon l'invention par des exemples de chronogrammes.

On dénomme :
- P1_{MW} et P2_{MW} la puissance du signal microonde respectivement appliquée au guide CPW1 et CPW2,
- ωₐ la pulsation envoyée dans le guide d'onde CPW2 et ω_{b} la pulsation envoyée dans le guide d'onde CPW1,
- Iz l'intensité du courant continu appliqué au premier fils conducteur WIz
- Id, Id₁, Id₂, Id₃ les intensités des courants continus dits courants CWI appliqué(s) au(x) deuxième(s) fil(s) conducteur(s),
- I1_{DC-MW} et I2_{DC-MW} les intensités des courants continus dits CMW appliqués respectivement aux guides d'onde CPW1 et CPW2.

Les figures 10 a), 11a) illustrent les chronogrammes d'application des différents signaux lors de la mise en œuvre d'un capteur de type accéléromètre respectivement selon la première et la seconde variante de recombinaison spatiale, pendant l'étape C de séparation/déplacement. Les figures 10 b) et 11 b) illustrent le déplacement des deux nuages à des instants choisis. Ces figures illustrent en outre la première variante du séquencement extinction/allumage, soit une extinction des puissances MW simultanément à l'allumage des courants CMW.

Pendant toute la séquence on applique une pulsation ωₐ à CPW2 et ω_{b} CPW1 (idem figure 4 a)).

Sur la figure 10 entre t1 et t2 on applique les puissances microondes aux guides. A t2 les deux nuages CL1 et CL2 sont séparés. Puis entre t2 et t3 on éteint progressivement le signal MW et on allume simultanément les courants continus I1_{DC-MW} et I2_{DC-MW} . Entre t3 et t4 on maintient ces courants pour la mesure. Puis entre t4 et t5 on diminue progressivement les courants I1_{DC-MW} et I2_{DC-MW} ce qui recombine spatialement les deux nuages (première variante de la recombinaison spatiale). A t5 les deux nuages sont recombinés spatialement.

Selon un premier mode de réalisation les courants Id et Iz restent constants. Selon un deuxième mode de réalisation illustré figure 10 a) le courant Iz diminue légèrement lorsque les courants I1_{DC-MW} et I2_{DC-MW} sont appliqués, afin d'augmenter la barrière de potentiel entre les deux états (figure 6). Lorsque ces courants ne sont plus appliqués on ré-augmente Iz légèrement. Selon ce deuxième mode de réalisation préférentiellement Id varie comme Iz.

Sur la figure 11 le début de la séquence est identique jusqu'à l'instant t4. Entre t4 et t5', simultanément à l'extinction des courants continus on allume à nouveau les signaux microonde, les nuages sont toujours séparés. Entre t5' et t6' on procède à la recombinaison spatiale en éteignant progressivement les signaux MW (deuxième variante de recombinaison spatiale). A t6' les deux nuages sont recombinés spatialement.

Les figures 12 et 14 illustrent les chronogrammes d'application des différents signaux respectivement pour la mise en œuvre d'un capteur de type gyroscope, respectivement selon la première et la seconde variante de recombinaison spatiale, pendant l'étape C de séparation/déplacement. Les figures 13 et 15 illustrent les déplacements des deux nuages à des instants choisis. Ces figures illustrent en outre la première variante du séquencement extinction/allumage, soit une extinction des puissances MW simultanément à l'allumage des courants CMW.

Sur les figures 12 et 13, les deux nuages sont séparés par applications de puissance MW sur les deux guides (entre t1 et t2). On applique pour cela des courants continus Id1 et Idz respectivement dans WIz et Wid1. Puis entre t2 et t3 on procède au remplacement des signaux MW par les courants continus I1_{DC-MW} et I2_{DC-MW}. Entre t3 et t4 on déplace les deux nuages selon Y du premier point de croisement C1 au deuxième point de croisement C2 en éteignant le courant Id1 et en allumant le courant Id2 dans Wld2. Entre t4 et t5 on déplace les deux nuages selon Y du deuxième point de croisement C2 au troisième point de croisement C2 en éteignant le courant Id2 et en allumant le courant Id3 dans WId3. Puis entre t5 et t6 on procède à la première recombinaison spatiale des deux nuages en C3 (finalisant le demi parcourt de la trajectoire fermée) en éteignant les courants continus I1_{DC-MW} et I2_{DC-MW} (première variante de recombinaison spatiale). A t6 les fréquences appliquées aux guides d'onde sont inversées et on repart pour le deuxième demi-tour, en procédant à nouveau à la séparation des deux nuages par application de champs MW aux guides entre t6 et t7.

Ici également selon un mode de réalisation illustré sur la figure 12 le courant Iz est légèrement diminué lors de l'application des courants I1_{DC-MW} et I2_{DC-MW} et ré-augmenter lorsqu'ils sont éteints, et les courants Id1 et Id3 suivent les variations de Iz. Selon un autre mode de réalisation les courants Iz et Id1, Id2 et Id3 ne présentent pas deux plateaux (voir par exemple variation de Idi sur la figure 3).

Sur les figures 14 et 15, la séquence est identique jusqu'à t5. Entre t5 et t6' on procède simultanément à l'extinction des courants continus on allume à nouveau les signaux microonde, les nuages sont toujours séparés. Entre t6' et t7' on procède à la recombinaison spatiale en éteignant progressivement les signaux MW (deuxième variante de recombinaison spatiale). Il en sera de même entre t11' et t12' où l'on procède simultanément à l'extinction des courants continus et à l'allumage des signaux microonde, puis entre t12' et t13' on procède à la recombinaison spatiale en éteignant progressivement les signaux MW.

## Revendications

1. Capteur à atomes ultrafroids (10) comprenant :
- une puce atomique (ACh) placée dans une enceinte à vide, comportant un plan XY dit plan de mesure normal à un axe Z, et comprenant :
∘ un premier et un deuxième guide d'ondes (CPWX1, CPWX2) adaptés à la propagation d'ondes hyperfréquences et de courants continus,
∘ au moins un premier fil conducteur (WIz) et un deuxième fil conducteur (Wld, Wld1) dont les projections respectives sont sécantes en un point définissant un premier point de croisement (C1),
- un dispositif de génération d'atomes (ACG) configuré pour générer un nuage d'atomes ultrafroids près dudit plan XY de ladite puce atomique,
- un générateur (GB) d'un champ magnétique homogène (Bc),
- un dispositif d'alimentation (PSD) comprenant au moins un générateur microonde (GMW) et au moins un générateur de courant continu (GDC), le dispositif d'alimentation étant configuré pour :
∘ appliquer auxdits premier et deuxième guides d'ondes des signaux microonde (I_{MW}),
∘ appliquer auxdits fils conducteurs des courants continus dits courants CWI,
- lesdits guides d'ondes, lesdits fils conducteurs et ledit dispositif d'alimentation étant configurés, lors de la mise en œuvre du capteur, pour séparer spatialement un premier nuage (CL1) d'atomes ultrafroids dans un premier état interne d'un deuxième nuage (CL2) d'atomes ultrafroids dans un deuxième état interne, en formant respectivement un premier (T1) et deuxième (T2) pièges à atomes ultrafroids en modifiant une énergie desdits atomes ultrafroids, et pour déplacer lesdits pièges (T1, T2) suivant une trajectoire linéaire ou fermée comprise dans un plan perpendiculaire à Z,
- le capteur comprenant en outre un système de détection (SDET) adapté à mesurer au moins une population de dits atomes ultrafroids dans un dit état interne,
**caractérisé en ce que** ledit dispositif d'alimentation (PSD) est configuré pour également appliquer auxdits premier et deuxième guides d'ondes des courants électriques continus (I_{DC-MW}) dit courants CMW,
et **en ce que** ledit dispositif d'alimentation (PSD) est configuré pour appliquer auxdits premier et deuxième guides d'ondes, pour la séparation spatiale des deux pièges, lesdits signaux microonde pour initier ladite séparation spatiale, puis lesdits courants électriques CMW à la place desdits signaux micro-ondes pour le maintien de ladite séparation spatiale.

2. Capteur selon l'une des revendications précédentes de type accéléromètre, ladite trajectoire suivie par les deux pièges étant linéaire.

3. Capteur selon l'une des revendications précédentes de type gyroscope comprenant une pluralité de deuxième fils conducteurs (Wldi) définissant une pluralité de points de croisement (Ci), ladite trajectoire suivie par les deux pièges étant fermée et parcourue en sens inverse par le premier et le deuxième piège.

4. Capteur selon l'une des revendications précédentes dans lequel chaque guide d'onde comprend trois fils, deux fils extérieurs de masse et un fil signal intérieur, le courant CMW étant injecté dans le fil signal.

5. Capteur selon l'une des revendications précédentes dans lequel le dispositif d'alimentation comprend en outre au moins un té de polarisation relié audit au moins un générateur microonde et audit au moins un générateur de courant continu, et configuré pour appliquer lesdits signaux microondes et lesdits courants CMW auxdits guide d'ondes.

6. Procédé de mesure d'un paramètre inertiel par un capteur à atomes ultrafroids comprenant une puce atomique (ACh) placée dans une enceinte à vide, comportant un plan XY normal à un axe Z dit plan de mesure, ladite puce atomique comprenant :
∘ un premier et un deuxième guide d'ondes (CPWX1, CPWX2) adaptés à la propagation d'ondes hyperfréquences et de courants continus,
∘ au moins un premier fil conducteur (W1) et un deuxième fil conducteur (W2) dont les projections respectives sont sécantes en un point définissant un premier point de croisement (O),
le procédé comprenant les étapes consistant à :
**A** Générer un nuage d'atomes ultrafroids près dudit plan XY de ladite puce atomique, incluant des phases d'émission desdits atomes, de refroidissement desdits atomes, d'initialisation desdits atomes dans au moins un premier état interne, et de piégeage d'un nuage de dits atomes ultrafroids dans un minimum local de potentiel, à une hauteur maîtrisée dudit plan XY, ledit piégeage s'effectuant par passage de courants continus dans le premier et le deuxième fil conducteurs,
**B** Initialiser le premier état interne et un deuxième état interne desdits atomes ultrafroids en superposant de manière cohérente lesdits atomes ultrafroids entre lesdits premier et deuxième états internes par une impulsion π/2,
**C** Séparer spatialement un premier nuage d'atomes ultrafroids dans le premier état interne d'un deuxième nuage d'atomes ultrafoirds dans le deuxième état interne, en formant respectivement un premier (T1) et deuxième (T2) pièges à atomes ultrafroids en modifiant des énergies desdits atomes ultrafroids, et
déplacer lesdits pièges (T1, T2) suivant une trajectoire linéaire ou fermée comprise dans un plan perpendiculaire à Z et initialisée au premier point de croisement,
ladite étape de séparation et de déplacement des atomes ultrafroids s'effectuant en appliquant, selon une séquence prédéterminée, un champ magnétique homogène (Bc) auxdits atomes ultrafroids, des courants continus, dit courants CWI, auxdits fils conducteurs, et des signaux microonde (I_{MW}) et des courants électriques continus, dit courants CMW, auxdits guides d'onde,
**D** Recombiner lesdits premier et deuxième états internes en appliquant auxdits atomes ultrafroids une deuxième impulsion π/2,
**E** Mesurer au moins une population de dits atomes ultrafroids dans au moins un dit état interne,
**caractérisé en ce que** l'étape de séparation comprend une sous étape d'initialisation comprenant l'application desdits signaux microonde auxdits guides d'onde, et une sous étape de maintien comprenant l'application desdits courants électriques CMW à la place desdits signaux microonde.

7. Procédé selon la revendication précédente dans lequel l'étape de séparation comprend une sous étape transitoire entre la sous étape d'initialisation et la sous étape de maintien, comprenant une extinction des signaux microondes et un allumage des courants CMW.

8. Procédé selon la revendication précédente dans lequel, pendant l'étape transitoire, l'extinction des signaux microondes et l'allumage des courants CMW s'effectuent simultanément.

9. Procédé selon la revendication précédente dans lequel l'étape transitoire présente une durée inférieure à 100 µs.

10. Procédé selon la revendication 6 dans lequel, pendant l'étape transitoire, ladite extinction des signaux microondes s'opère préalablement ou postérieurement audit allumage des courants CMW.

11. Procédé selon l'une des revendications 6 à 10 dans lequel lors de l'étape de déplacement une recombinaison spatiale des deux nuages s'opère en éteignant progressivement les courants CMW.

12. Procédé selon l'une des revendications 6 à 10 dans lequel lors de l'étape de déplacement, une recombinaison spatiale des deux nuages s'opère en éteignant les courants CMW et en rallumant simultanément les signaux microonde, puis en éteignant progressivement les signaux microonde.

## Patentansprüche

1. Ultrakaltatomsensor (10), umfassend:
- ein Atomchip (ACh), das in einem Hohlraum platziert ist, umfassend eine als Messebene bezeichnete XY-Ebene, die normal zu einer Z-Achse ist, und umfassend:
- einen ersten und einen zweiten Wellenleiter (CPWX1, CPWX2), die zur Weiterleitung von Höchstfrequenzwellen und Gleichströmen angepasst sind,
- mindestens eine erste leitfähige Leitung (Wlz) und eine zweite leitfähige Leitung (Wld, Wld1), deren jeweilige Projektionen sich in einem Punkt schneiden, der einen ersten Schnittpunkt (C1) definiert,
- eine Atomerzeugungsvorrichtung (ACG), die konfiguriert ist, um eine Wolke ultrakalter Atome in der Nähe der XY-Ebene des Atomchips zu erzeugen,
- einen Generator (GB) eines homogenen Magnetfeldes (Bc),
eine Versorgungsvorrichtung (PSD), die mindestens einen Mikrowellengenerator (GMW) und mindestens einen Gleichstromgenerator (GDC) umfasst, wobei die Versorgungsvorrichtung konfiguriert ist zum:
- Anlegen von Mikrowellensignalen (I_{MW}) am ersten und zweiten Wellenleiter;
- Anlegen von als CWI-Ströme bezeichneten Gleichströmen an den leitfähigen Leitungen,
- wobei die Wellenleiter, die leitfähigen Leitungen und die Versorgungsvorrichtung konfiguriert sind, um beim Einsatz des Sensors eine erste Wolke (CL1) von ultrakalten Atomen in einem ersten inneren Zustand von einer zweiten Wolke (CL2) von ultrakalten Atomen in einem zweiten inneren Zustand räumlich zu trennen, indem jeweils eine erste (T1) und eine zweite (T2) Falle für ultrakalte Atome gebildet wird, indem eine Energie der ultrakalten Atome modifiziert wird, und um die Fallen (T1, T2) entlang eines linearen oder geschlossenen Wegs, der in einer zu Z senkrechten Ebene enthalten ist, zu verschieben,
wobei der Sensor weiter ein Erfassungssystem (SDET) umfasst, das dazu angepasst ist, mindestens eine Population der ultrakalten Atome in einem inneren Zustand zu messen, **dadurch gekennzeichnet, dass** die Versorgungsvorrichtung (PSD) konfiguriert ist, um ebenfalls am ersten und zweiten Wellenleiter als CMW-Ströme bezeichnete elektrische Gleichströme (I_{DC-MW}) anzulegen,
und dadurch, dass die Versorgungsvorrichtung (PSD) konfiguriert ist, um am ersten und zweiten Wellenleiter zur räumlichen Trennung der zwei Fallen die Mikrowellensignale anzulegen, um die räumliche Trennung zu initiieren, dann die elektrischen CMW-Ströme anstelle der Mikrowellensignale, um die räumliche Trennung aufrechtzuerhalten.

2. Sensor nach einem der vorstehenden Ansprüche vom Beschleunigungstyp, wobei der von den zwei Fallen eingenommene Weg linear ist.

3. Sensor nach einem der vorstehenden Ansprüche vom Gyroskoptyp, umfassend eine Vielzahl von zweiten leitfähigen Leitungen (Wldi), die eine Vielzahl von Schnittpunkten (Ci) definieren, wobei der von den zwei Fallen eingenommene Weg geschlossen ist und von der ersten und der zweiten Falle in entgegengesetzter Richtung zurückgelegt wird.

4. Sensor nach einem der vorstehenden Ansprüche, wobei jeder Wellenleiter drei Leitungen umfasst, zwei äußere Masseleitungen und eine innere Signalleitung, wobei der CMW-Strom in die Signalleitung eingespeist wird.

5. Sensor nach einem der vorstehenden Ansprüche, wobei die Versorgungsvorrichtung weiter mindestens ein T-Stück zur Polarisierung umfasst, das mit dem mindestens einen Mikrowellengenerator und dem mindestens einen Gleichstromgenerator verbunden ist und konfiguriert ist, um die Mikrowellensignale und die CMW-Ströme an den Wellenleitern anzulegen.

6. Verfahren zum Messen eines Trägheitsparameters durch einen Ultrakaltatomsensor, der ein Atomchip (ACh) umfasst, das in einem Hohlraum platziert ist, umfassend eine als Messebene bezeichnete XY-Ebene, die normal zu einer Z-Achse ist, wobei das Atomchip Folgendes umfasst:
- einen ersten und einen zweiten Wellenleiter (CPWX1, CPWX2), die zur Weiterleitung von Höchstfrequenzwellen und Gleichströmen angepasst sind,
- mindestens eine erste leitfähige Leitung (W1) und eine zweite leitfähige Leitung (W2), deren jeweilige Projektionen sich in einem Punkt schneiden, der einen ersten Schnittpunkt (O) definiert,
wobei das Verfahren die Schritte umfasst, die aus Folgendem bestehen:
**A** Erzeugen einer Wolke ultrakalter Atome in der Nähe der XY-Ebene des Atomschips, einschließlich Phasen der Emission der Atome, der Abkühlung der Atome, der Initialisierung der Atome in mindestens einen ersten inneren Zustand und des Einfangens einer Wolke der ultrakalten Atome bei einem lokalen Mindestpotenzial auf einer gesteuerten Höhe der XY-Ebene, wobei das Einfangen durch den Durchgang von Gleichströmen in der ersten und der zweiten leitfähigen Leitung durchgeführt wird,
**B** Initialisieren des ersten inneren Zustands und eines zweiten inneren Zustands der ultrakalten Atome, indem die ultrakalten Atome auf kohärente Weise zwischen dem ersten und dem zweiten inneren Zustand durch einen Impuls *π*/2 überlagert werden,
**C** räumliches Trennen einer ersten Wolke von ultrakalten Atomen im ersten inneren Zustand von einer zweiten Wolke von ultrakalten Atomen im zweiten inneren Zustand, indem jeweils eine erste (T1) und eine zweite (T2) Falle für ultrakalte Atome gebildet wird, indem Energien der ultrakalten Atome modifiziert werden, und Verschieben der Fallen (T1, T2) entlang eines linearen oder geschlossenen Wegs, der in einer zu Z senkrechten Ebene enthalten ist und am ersten Schnittpunkt initialisiert wird,
wobei der Schritt der Trennung und der Verschiebung der ultrakalten Atome durchgeführt wird, indem in einer vorbestimmten Reihenfolge ein homogenes Magnetfeld (BC) an den ultrakalten Atomen, als CWI-Ströme bezeichnete Gleichströme an den leitfähigen Leitungen, und Mikrowellensignale (I_{MW}) und als CMW-Ströme bezeichnete elektrische Gleichströme an den Wellenleitern angelegt werden,
**D** erneutes Kombinieren des ersten und zweiten inneren Zustands durch Anlegen eines zweiten Impulses π/2 an den ultrakalten Atomen,
**E** Messen mindestens einer Population der ultrakalten Atome in mindestens dem inneren Zustand,
**dadurch gekennzeichnet, dass** der Schritt der Trennung einen Teilschritt der Initialisierung, der das Anlegen der Mikrowellensignale an den Wellenleitern umfasst, und einen Teilschritt der Aufrechterhaltung umfasst, der das Anlegen der elektrischen CMW-Ströme anstelle der Mikrowellensignale umfasst.

7. Verfahren nach dem vorstehenden Anspruch, wobei der Schritt der Trennung einen Übergangsteilschritt zwischen dem Teilschritt der Initialisierung und dem Teilschritt der Aufrechterhaltung umfasst, der ein Ausschalten der Mikrowellensignale und ein Einschalten der CMW-Ströme umfasst.

8. Verfahren nach dem vorstehenden Anspruch, wobei während des Übergangsschritts das Ausschalten der Mikrowellensignale und das Einschalten der CMW-Ströme gleichzeitig durchgeführt werden.

9. Verfahren nach dem vorstehenden Anspruch, wobei der Übergangsschritt eine Dauer kleiner als 100 µs aufweist.

10. Verfahren nach dem Anspruch 6, wobei während des Übergangsschritts das Abschalten der Mikrowellensignale vor oder nach dem Einschalten der CMW-Ströme durchgeführt wird.

11. Verfahren nach einem der Ansprüche 6 bis 10, wobei während des Schritts der Verschiebung eine räumliche Neukombination der zwei Wolken durchgeführt wird, indem die CMW-Ströme allmählich abgeschaltet werden.

12. Verfahren nach einem der Ansprüche 6 bis 10, wobei während des Schritts der Verschiebung eine räumliche Neukombination der zwei Wolken durchgeführt wird, indem die CMW-Ströme allmählich abgeschaltet werden und gleichzeitig die Mikrowellensignale eingeschaltet werden, dann indem die Mikrowellensignale allmählich abgeschaltet werden.

## Claims

1. An ultracold atom sensor (10) comprising:
- an atomic chip (ACh) placed in a vacuum cabinet, having an XY plane referred to as the measurement plane perpendicular to a Z-axis, and comprising:
- a first and a second waveguide (CPWX1, CPWX2) adapted for the propagation of microwave waves and direct currents,
- at least a first conductive wire (Wlz) and a second conductive wire (Wld, Wld1) whose respective projections intersect at a point defining a first crossing point (C1),
- an atom generation device (ACG) configured to generate a cloud of ultracold atoms near said XY plane of said atomic chip,
- a generator (GB) of a homogeneous magnetic field (Bc),
- a power supply device (PSD) comprising at least one microwave generator (GMW) and at least one direct current generator (GDC), the power supply device being configured to:
- apply microwave signals (I_{MW}) to said first and second waveguides,
- apply direct currents referred to as CWI currents to said conductive wires,
- said waveguides, said conductive wires, and said power supply device being configured, during operation of the sensor, to spatially separate a first cloud (CL1) of ultracold atoms in a first internal state from a second cloud (CL2) of ultracold atoms in a second internal state, by forming, respectively, a first (T1) and second (T2) ultracold atom traps by modifying the energy of said ultracold atoms, and to move said traps (T1, T2) along a linear or closed trajectory lying in a plane perpendicular to Z,
- the sensor further comprising a detection system (SDET) adapted to measure at least one population of said ultracold atoms in a said internal state, **characterized in that** said power supply device (PSD) is configured to also apply to said first and second waveguides direct electric currents (I_{DC-MW}), known as CMW currents,
and **in that** said power supply device (PSD) is configured to apply to said first and second waveguides, for the spatial separation of the two traps, said microwave signals to initiate said spatial separation, and then said CMW electric currents in place of said microwave signals to maintain said spatial separation.

2. The sensor according to one of the preceding claims of the accelerometer type, said path followed by the two traps being linear.

3. The sensor according to one of the preceding claims, of the gyroscope type, comprising a plurality of second conductive wires (Wldi) defining a plurality of crossing points (Ci), said path followed by the two traps being closed and traversed in opposite directions by the first and second traps.

4. The sensor according to one of the preceding claims, wherein each waveguide comprises three wires, two outer ground wires and one inner signal wire, with the CMW current being injected into the signal wire.

5. The sensor according to one of the preceding claims, wherein the power supply device further comprises at least one bias T-junction connected to said at least one microwave generator and said at least one direct current generator, and configured to apply said microwave signals and said CMW currents to said waveguides.

6. A method for measuring an inertial parameter using an ultracold atom sensor comprising an atomic chip (ACh) placed in a vacuum cabinet, having an XY plane normal to a Z-axis, referred to as the measurement plane, said atomic chip comprising:
- a first and a second waveguide (CPWX1, CPWX2) adapted for the propagation of microwave waves and direct currents,
- at least a first conductive wire (W1) and a second conductive wire (W2) whose respective projections intersect at a point defining a first crossing point (O),
the method comprising the steps of:
**A** generating a cloud of ultracold atoms near said XY plane of said atomic chip, including phases of emitting said atoms, cooling said atoms, initializing said atoms into at least a first internal state, and trapping a cloud of said ultracold atoms in a local potential minimum at a controlled height above said XY plane, said trapping being performed by passing direct currents through the first and second conductive wires,
**B** iniitializing the first internal state and a second internal state of said ultracold atoms by coherently superimposing said ultracold atoms between said first and second internal states using a *π*/2 pulse,
**C** spatially separating a first cloud of ultracold atoms in the first internal state from a second cloud of ultracold atoms in the second internal state, forming, respectively, a first (T1) and second (T2) ultracold atom trap by modifying the energies of said ultracold atoms, and moving said traps (T1, T2) along a linear or closed trajectory lying in a plane perpendicular to Z and initialized at the first intersection point,
said step of separating and moving the ultracold atoms being carried out by applying, in a predetermined sequence, a homogeneous magnetic field (Bc) to said ultracold atoms, direct currents, referred to as CWI currents, to said conductive wires, and microwave signals (I_{MW}) and direct electric currents, known as CMW currents, to said waveguides,
**D** recombining said first and second internal states by applying a second π/2 pulse to said ultracold atoms,
**E** measuring at least one population of said ultracold atoms in at least one said internal state,
**characterized in that** the separation step comprises an initialization substep comprising the application of said microwave signals to said waveguides, and a maintenance substep comprising the application of said CMW electric currents in place of said microwave signals.

7. The method according to the preceding claim, wherein the separation step comprises a transitional substep between the initialization substep and the maintenance substep, comprising turning off the microwave signals and turning on the CMW currents.

8. The method according to the preceding claim, wherein, during the transition step, the turning off of the microwave signals and the turning on of the CMW currents occur simultaneously.

9. The method according to the preceding claim, wherein the transitional step has a duration of less than 100 µs.

10. The method according to claim 6, wherein, during the transitional step, the turning off of the microwave signals occurs prior to or after the turning on of the CMW currents.

11. The method according to any one of claims 6 through 10, wherein, during the displacement step, a spatial recombination of the two clouds occurs by gradually turning off the CMW currents.

12. The method according to any one of claims 6 through 10, wherein, during the movement step, a spatial recombination of the two clouds occurs by turning off the CMW currents and simultaneously turning on the microwave signals, then gradually turning off the microwave signals.
